# EUROPEAN PATENT APPLICATION

(11) **EP 2 922 369 A1**
(43) Date of publication of application: **23.09.2015**
(21) Application number: 14184811.9
(22) Date of filing: 15.09.2014
(51) Int. Cl.: H05B 37/02

(54) **Fluorescent lamp LED replacement**

(30) Priority: 18.03.2014 US 201414218927
(71) Applicant: Sadwick, Laurence P., Salt Lake City, UT 84115 (US); Barabas, Neil J., Chatsworth, CA 91311 (US)
(72) Inventor: Sadwick, Laurence P., Salt Lake City, UT 84115 (US); Barabas, Neil J., Chatsworth, CA 91311 (US)
(74) Representative: Maury, Richard Philip

(57) **Abstract**

An apparatus for supplying power includes a power input configured to receive electrical current from a fluorescent lamp fixture ballast, a rectifier connected to the power input, a constant current driver connected to an output of the rectifier, and a power output.

## Description

### BACKGROUND

Fluorescent lamps are widely used in a variety of applications, such as for general purpose lighting in commercial and residential locations, in backlights for liquid crystal displays in computers and televisions, etc. When ballasts and starters require replacement, it can be difficult or challenging and even potentially dangerous for individuals and/or personnel who are not experienced or familiar with electrical matters including removal and installation of ballasts. Conventional fluorescent tubes used for general lighting cannot, in general, be directly plugged into alternating current (AC) voltage lines. Fluorescent lamps generally include a glass tube, circle, spiral or other shaped bulb containing a gas at low pressure, such as argon, xenon, neon, or krypton, along with low pressure mercury vapor. A fluorescent coating is deposited on the inside of the lamp. As an electrical current is passed through the lamp, mercury atoms are excited and photons are released, most having frequencies in the ultraviolet spectrum. These photons are absorbed by the fluorescent coating, causing it to emit light at visible frequencies.

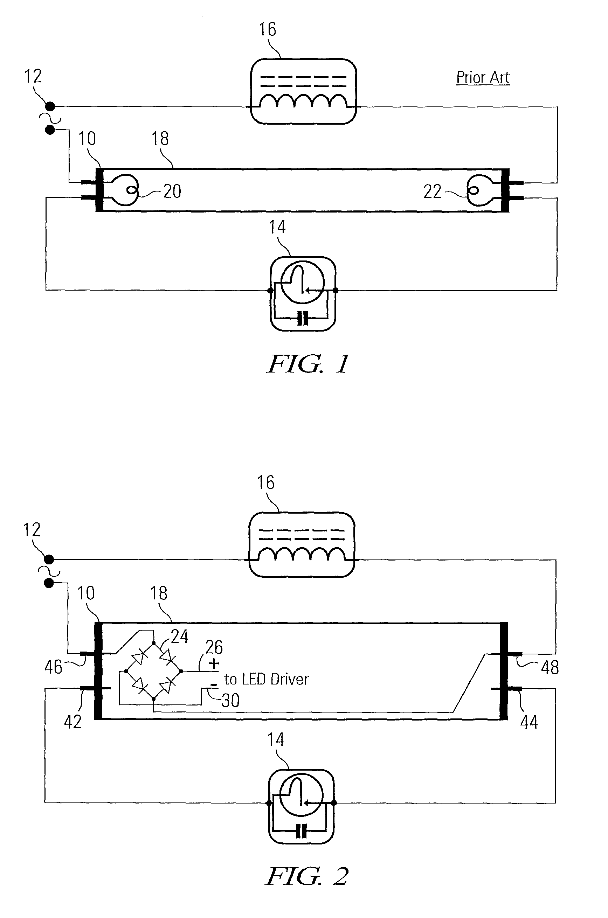

Turning now to Fig. 1, a block diagram of a fluorescent lamp fixture 10 and its associated starter 14 and magnetic ballast 16 is illustrated. Fluorescent lamp fixtures 10 which use magnetic ballasts 16 often use a configuration which involves a starter 14. The simplest configuration illustrated in Fig. 1 powers a single fluorescent lamp 18 in the fluorescent lamp fixture 10 based on an AC input 12. The starter 14 ignites the fluorescent tube by first shorting, causing current to be passed though the heaters 20 and 22 and ballast 16. The starter 14 then opens, forcing the magnetic ballast 16 to produce a voltage spike. Both the action of heating the heaters 20 and 22 and the voltage spike help to ignite the fluorescent lamp 18. Electronic ballasts convert the input AC voltage supplied (typically at a low AC frequency of 50 or 60 Hz) power into generally a sinusoidal AC output waveform typically designed for a constant current output in the frequency range of above 20 kHz to less than 100 kHz.

Fluorescent lamps suffer from a number of disadvantages, such as a relatively short life span, flickering, and noisy ballasts, etc. Not only do fluorescent tubes need regular replacement, but magnetic and electronic ballasts and starters can also fail and require replacement. Ballasts and starters are often not user-replaceable parts and must be replaced by a qualified electrician.

### SUMMARY

The present invention provides a fluorescent replacement that powers an LED lamp from a fluorescent fixture, with or without a starter in place in the fluorescent fixture including operating and being powered by either magnetic or electronic ballasts and/or, for example, the AC lines after the ballast has been removed or fails to operate.

This summary provides only a general outline of some particular embodiments. Many other objects, features, advantages and other embodiments will become more fully apparent from the following detailed description. Nothing in this document should be viewed as or considered to be limiting in any way or form.

### BRIEF DESCRIPTION OF THE DRAWINGS

A further understanding of the various exemplary embodiments may be realized by reference to the figures which are described in remaining portions of the specification. In the figures, like reference numerals may be used throughout several drawings to refer to similar components.
Fig. 1 depicts a prior art fluorescent lamp fixture with magnetic ballast and starter.
Fig. 2 depicts a block diagram of an example embodiment of a fluorescent lamp replacement with a diode bridge and two unused florescent fixture terminals.
Fig. 3 depicts a block diagram of an example embodiment of a fluorescent lamp replacement with a diode bridge and shorted fluorescent fixture terminals.
Fig. 4 depicts a block diagram of an example embodiment of a fluorescent lamp replacement with two diode bridges and flexible connections to fluorescent fixture terminals.
Fig. 5 depicts a block diagram of an example embodiment of a fluorescent lamp replacement including an example LED driver.
Fig. 6 depicts a simple block diagram of an example embodiment of the present invention with a high frequency diode bridge and a shunt regulator.
Fig. 7 depicts a simple block diagram of an example embodiment of a fluorescent lamp LED replacement with a high frequency diode bridge, a shunt regulator and current feedback.
Fig. 8 depicts a simple block diagram of an example embodiment of a fluorescent lamp LED replacement with a high frequency diode bridge, a shunt regulator and current feedback and additional over-protection and current control feedback.
Fig. 9 depicts a block diagram of an example embodiment of a fluorescent lamp LED replacement that can operate and receive power either from a ballast or from the AC line voltage.
Fig. 10 depicts a block diagram of an example embodiment of a fluorescent lamp LED replacement with a high frequency diode bridge (or bridges) and a current to current transformer (or transformation) with a shunt regulator and associated feedback and control to set the current of a LED output load.
Fig. 11 depicts a block diagram of an example embodiment of a fluorescent lamp LED replacement with a high frequency diode bridge (or bridges) and a current to current transformer (or transformation) that feeds a rectification stage with a shunt regulator and associated feedback and control to set the current of a LED output load where the feedback and control information is fed back to the shunt regulator.
Fig. 12 depicts a block diagram of an example embodiment of a fluorescent lamp LED replacement with a high frequency diode bridge (or bridges) and a current to current transformer (or transformation) with a shunt regulator and associated feedback and control to set the current of a LED output load where the feedback and control information is also fed back to the current to current transformation stage and the rectification stage.
Fig. 13 depicts a block diagram of an example embodiment of a fluorescent lamp LED replacement with a high frequency diode bridge (or bridges) and a current to current transformer (or transformation) with a shunt regulator and associated feedback and control to set the current of a LED output load where the feedback and control information is also fed back to the current to current transformation stage and the shunt regulator.
Fig. 14 depicts a block diagram of an example embodiment of a fluorescent lamp LED replacement with a high frequency diode bridge (or bridges) and a current to current transformer (or transformation) having protection and detection with a shunt regulator and associated feedback and control to set the current of a LED output load where the feedback and control information is also fed back to the current to current transformation stage and the shunt regulator.
Fig. 15 depicts a block diagram of an example embodiment of a fluorescent lamp LED replacement with a high frequency diode bridge (or bridges) and a current to current transformer (or transformation) having protection and detection.
Fig. 16 depicts a block diagram of an example embodiment of a fluorescent lamp LED replacement with a high frequency diode bridge (or bridges) and a current to current transformer (or transformation) having protection and detection with a shunt regulator and associated feedback and control to set the current of a LED output load.
Fig. 17 depicts a block diagram of an example embodiment of a fluorescent lamp LED replacement with a high frequency diode bridge (or bridges) and a current to current transformer.
Fig. 18 depicts an example embodiment of a ballast driver for a fluorescent lamp LED replacement.
Fig. 19 depicts an example embodiment of a ballast driver for a fluorescent lamp LED replacement.
Fig. 20 depicts an example embodiment of a ballast driver for a fluorescent lamp LED replacement.
Fig. 21 depicts an example embodiment of a ballast driver for a fluorescent lamp LED replacement.
Fig. 22 depicts an example embodiment of a ballast driver for a fluorescent lamp LED replacement.
Fig. 23 depicts an example embodiment of a ballast and universal AC input driver for a fluorescent lamp LED replacement.
Fig. 24 depicts an example embodiment of a ballast and universal AC input driver for a fluorescent lamp LED replacement.
Fig. 25 depicts a block diagram of an example embodiment of a fluorescent lamp LED replacement that accepts either an AC lines input or a ballast output.
Fig. 26 depicts a block diagram of an example embodiment of a fluorescent lamp LED replacement that accepts either an AC lines input or a ballast output.
Fig. 27 depicts a block diagram of an example embodiment of a fluorescent lamp LED replacement that accepts either an AC lines input or a ballast output.
Fig. 28 depicts another block diagram of an example embodiment of a fluorescent lamp LED replacement that accepts either an AC lines input or a ballast output.
Fig. 29 depicts a block diagram of an example embodiment of a fluorescent lamp LED replacement that accepts either an AC lines input or a ballast output.
Fig. 30 depicts another block diagram of an example embodiment of a fluorescent lamp LED replacement that accepts either an AC lines input or a ballast output.
Fig. 31 depicts another block diagram of an example embodiment of a fluorescent lamp LED replacement that accepts either an AC lines input or a ballast output.
Fig. 32 depicts another block diagram of an example embodiment of a fluorescent lamp LED replacement that accepts either an AC lines input or a ballast output.
Fig. 33 depicts another block diagram of an example embodiment of a fluorescent lamp LED replacement that accepts either an AC lines input or a ballast output.
Fig. 34 depicts a block diagram of an example embodiment of a fluorescent lamp LED replacement that can operate and receive power either from a ballast or from the AC line voltage.
Fig. 35 depicts an example embodiment of the present invention that accepts the output from a ballast for a fluorescent lamp.
Fig. 36 depicts an example embodiment of the present invention that accepts the output from a ballast for a fluorescent lamp.
Fig. 37 depicts an example embodiment of the present invention that accepts the output from a ballast for a fluorescent lamp.
Fig. 38 depicts an example embodiment of the present invention that accepts the output from a ballast for a fluorescent lamp.
Fig. 39 depicts a block diagram of an example embodiment of a fluorescent lamp LED replacement that accepts either an AC lines input or a ballast output.
Fig. 40 depicts a simple block diagram of an example embodiment of a fluorescent lamp LED replacement that accepts the output of a ballast.
Fig. 41 depicts a simple block diagram of an example embodiment of a fluorescent lamp LED replacement that accepts the output of a ballast.
Fig. 42 depicts a simple block diagram of an example embodiment of a fluorescent lamp LED replacement that accepts the output of a fluorescent ballast replacement that is designed and intended to drive LED Fluorescent Lamp Replacements.
Fig. 43 depicts a simple block diagram of an example embodiment of a fluorescent lamp LED replacement that accepts the output of a fluorescent ballast replacement that is designed and intended to drive LED Fluorescent Lamp Replacements that is Triac dimmable.
Fig. 44 depicts a simple block diagram of an example embodiment of a fluorescent lamp LED replacement that accepts the output of a fluorescent ballast replacement that is designed and intended to drive LED Fluorescent Lamp Replacements that is remote dimmable (and can also be Triac or other dimmer dimmable too).
Figs. 45-57 depict various embodiments of a heater emulation circuit that emulates a heater circuit, enabling proper operation of a heater driver or controller when a fluorescent tube replacement is in place.
Fig. 58 depicts a simple block diagram of another example embodiment of a fluorescent lamp LED replacement that accepts the output of a fluorescent ballast replacement that is designed and intended to drive LED Fluorescent Lamp Replacements that is remote dimmable (and can also be Triac or other dimmer dimmable too).

### DESCRIPTION

Brief definitions of terms used throughout this document are given below. The phrases "in one embodiment," "according to one embodiment," and the like generally mean the particular feature, structure, or characteristic following the phrase is included in at least one embodiment of the present invention, and may be included in more than one embodiment of the present invention. Importantly, such phrases do not necessarily refer to the same embodiment.

If the specification states a component or feature "may", "can", "could", or "might" be included or have a characteristic, that particular component or feature is not required to be included or have the characteristic.

The Fluorescent Lamp LED Replacement does not require electrical re-wiring to install and works with electronic ballasts. No rewiring or special handling required. Embodiments of the present invention can be a direct replacement to be powered by ballasts in lighting fixtures and also for use in rewired fixtures where AC power is supplied directly to the lamps.

A fluorescent replacement is disclosed herein that may be used to power one or more LED drivers and lamps from a fluorescent fixture, with or without a fluorescent starter in place. An LED driver typically only requires two inputs from the AC source, which are then rectified typically using a bridge rectifier. Turning now to Fig. 2, an example embodiment of a simple configuration places the ballast 16 in series with a bridge rectifier 24, which drives DC terminals 26 and 30 to the LED driver, leaving the starter 14 disconnected. This configuration will light properly, but it requires the installer to have knowledge of how both the fixture 10 and the lamp 18 are wired. In general, picking pins at random will only work 50% of the time for each end.

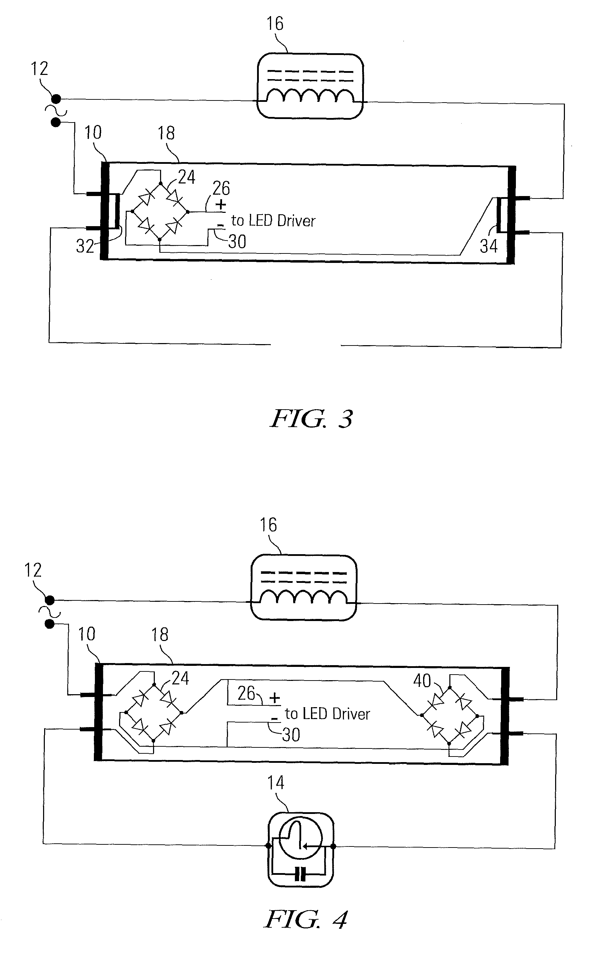

Turning now to Fig. 3, another solution is to connect and short the heater connections together with shorting wires or jumpers 32 and 34. This will ensure that the correct pins are connected to the LED driver on each end, however, the shorting wires also place the starter 24 in the circuit. The starter 14 often must be removed to insure and allow proper operation. Removing the starter 14 can often be a simple operation to perform, however, if the starter 14 were accidentally left in place, the LED driver and/or ballast may be damaged or destroyed. When the starter 14 fires, the starter 14 may also cause the LED lamp to flash rapidly. The voltage spike can also potentially overdrive the LED driver and damage or destroy the internal circuitry.

Turning now to Fig. 4, another embodiment eliminates these problems using a 4-wire input scheme. This uses a second bridge rectifier 40, or a total of 8 discrete diodes to rectify the input. With this configuration any combination of inputs will power the LED driver and not pass any current along to the starter 14. This allows the starter 14 to be left in place and thus provide a drop-in replacement for fluorescent lamps 18. It also leaves the fixture 10 unmodified, allowing the fixture 20 to be used again at a later time for fluorescent lamps 28 or to have people unskilled in electrical matters replace the fluorescent lamps 18 with the LED drivers and/or lamps. In addition this configuration is backwards-compatible with the configurations in Figs. 2 and 3 and can also be powered using direct power (i.e. line input, no ballast) connected to any 2 wires on the same or different ends. In particular, the implementation and embodiment shown in Fig. 4 allows for greater flexibility and potentially reduced EMI/EMC by utilizing the positive side of the AC to DC converter LED power supply/driver as one input for the second bridge 40 or second set of diodes, thus reducing potential EMI/EMC issues while also increasing the flexibility and reducing wiring lengths. Additional benefits of the present invention may be realized such as modularity and flexibility of design, construction, manufacturing, etc. In addition, the present invention can, in general, be made to be an add-on feature to many existing AC to DC power supplies and, with proper adaptions and modifications, DC to DC power supplies. In addition, the present invention may be used with DC primary input power, constant current input power and can be optimized to operate over a wide range of input conditions, voltages and currents.

The fluorescent replacement of Fig. 4 may be used with any suitable LED driver and/or LED lamp or other types of loads, and is not limited to any examples set forth herein. For example, the fluorescent replacement of Fig. 4 may be used with any of the embodiments described in U.S. Patent Application No. 12/422,258 entitled "Dimmable Power Supply", filed April 11, 2009, the entirety of which is incorporated herein by reference for all purposes, or in U.S. Patent Application No. 12,776/435 entitled "Universal Dimmer", filed May 10, 2010, the entirety of which is incorporated herein by reference for all purposes.

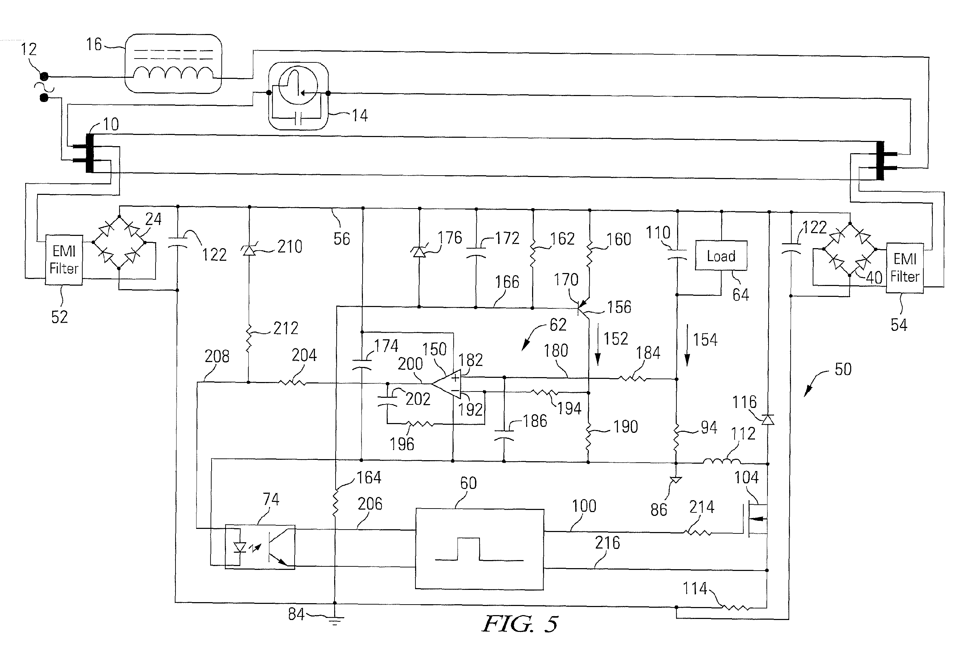

Turning now to Fig. 5, one example of an LED driver 50 that may be used with the fluorescent lamp fixture 10 of Fig. 4 is illustrated. The first bridge rectifier 24 is connected to the first end of the fluorescent lamp fixture 10 (optionally through an appropriate EMI filter 52), and the second bridge rectifier 40 is connected to the second end of the fluorescent lamp fixture 10 (optionally through another EMI filter 54 that is designed to properly pass power while reducing EMI). Other components may also be placed in series or parallel with the bridge rectifiers including an input fuse, a varistor, a spark gap, etc. Alternatively, the diode bridges could also be implemented with an appropriate number of individual diodes having the appropriate characteristics including high frequency diode performance. A DC input node 56 is driven by the bridge rectifiers 52 and 54. Again, the fluorescent replacement (e.g., the fluorescent lamp fixture 10 and associated connections such as bridge rectifiers 24 and 40 and EMI filters 52 and 54) is not limited to use with any particular load. The bridge rectifiers 24 and 40 and EMI filters 52 and 54 and LED and/or OLED driver/lamp or other load may be contained within a fluorescent tube replacement having any standard fluorescent form factor or any other size, shape, or configuration, or may be housed entirely or partially outside a replacement tube.

In the example LED driver 50, a variable pulse generator 60 is used to provide a stream of pulses at the pulse output 100. As described above, the variable pulse generator 60 may be embodied in any suitable device or circuit for generating a stream of pulses. Those pulses may have any suitable shape, such as substantially square pulses, semi-sinusoidal, triangular, etc. although square or rectangular are the most common in driving field effect transistors. The frequency of the pulses may also be set at any desired level and range, such as 30 kHz or 100 kHz, or higher, etc. that enable the load current detector 62 to disregard changes in a load current due to the pulses input waveform and also realize a very high power factor approaching unity. The width of the pulses is controlled by the load current detector 62 once a maximum load current is reached, limiting the load current to the maximum even if the input voltage rises higher than needed to provide the maximum output current. For example, in one embodiment, the maximum pulse width is set at about one tenth of a pulse cycle. This may be interpreted from one point of view as a 10 percent duty cycle at maximum pulse width. However, the present invention is not limited to any particular maximum pulse width and, for that matter, the universal power supply driver can be implemented using a constant on-time, a constant off-time, a constant period, other pulse schemes, etc.

The variable pulse generator 60 is powered from the input voltage by any suitable means including, but not limited to, a rectified ballast output, bias circuit from the rectified AC lines, bias coils in transformers, etc. Because a wide range of known methods of reducing or regulating a voltage are known, the power supply for the variable pulse generator 60 from the input voltage is not shown in Fig. 5. For example, a voltage divider or a voltage regulator may be used to drop the voltage from the input voltage down to a useable level for the variable pulse generator 20.

In one particular embodiment illustrated in Fig. 5, the load current detector 62 includes an operational amplifier (op-amp) 150 acting as an error amplifier to compare a reference current 152 and a load current 154. The op-amp 150 may be embodied by any device suitable for comparing the reference current 152 and load current 154, including active devices and passive devices including standard comparator integrated circuits, digital comparator(s), microcontroller(s), microprocessor(s), etc. The op-amp 150 is referred to herein generically as a comparator, and the term comparator should be interpreted as including and encompassing any device, including active and passive devices, for comparing the reference current 152 and load current 154. The reference current 152 may be supplied by a transistor such as bipolar junction transistor (BJT) 156 connected in series with resistor 160 to the input voltage 16. A resistor 162 and a resistor 164 are connected in series between the input voltage 16 and the circuit ground 84, forming a voltage divider with a central node 166 connected to the base 170 of the BJT 156. The BJT 156 and resistor 160 act as a constant current source that is varied by the voltage on the central node 166 of the voltage divider 162 and 164, which is in turn dependent on the input voltage 16. A capacitor 172 may be connected between the input voltage 16 and the central node 166 to form a time constant if desired or needed for voltage changes at the central node 166. The driver thus responds to the average voltage of input voltage 16 rather than the instantaneous voltage. In one particular embodiment, the local ground 86 floats at about 10 V below the input voltage 16 at a level established by the load 64. A capacitor 174 may be connected between the input voltage 16 and the local ground 86 to smooth the voltage powering the load current detector 62 if desired. A Zener diode 176 may also be connected between the input voltage 16 and the central node 166 to set a maximum load current 154 by clamping the reference current that BJT 156 can provide to resistor 190. In other embodiments, the load current detector 62 may have its current reference derived by a simple resistive voltage divider, with suitable AC input voltage sensing, level shifting, and maximum clamp, rather than BJT 156.

The load current 154 (meaning, in this embodiment, the current through the load 64 and through the capacitor 110 connected in parallel with the load 64) is measured using the load current sense resistor 94. The capacitor 110 can be configured to either be connected through the sense resistor 94 or bypass the sense resistor 94. The current measurement 180 is provided to an input of the error amplifier 150, in this case, to the non-inverting input 182. A time constant is applied to the current measurement 180 using any suitable device, such as the RC lowpass filter made up of the series resistor 184 and the shunt capacitor 186 to the local ground 86 connected at the non-inverting input 182 of the error amplifier 150. As discussed above, if needed, any suitable device for establishing the desired time constant or time constants may be used such that the load current detector 62 disregards rapid variations in the load current 154 due to the pulses from the variable pulse generator 60 and any regular waveform of the input voltage 16. The load current detector 62 thus substantially filters out changes in the load current 154 due to the pulses, averaging the load current 154 such that the load current detector output 200 is substantially unchanged by individual pulses at the variable pulse generator output 100.

The reference current 152 is measured using a sense resistor 190 connected between the BJT 156 and the local ground 86, and is provided to another input of the error amplifier 150, in this case, the inverting input 192. The error amplifier 150 is connected as a difference amplifier with negative feedback, amplifying the difference between the load current 154 and the reference current 152. An input resistor 194 is connected in series with the inverting input 192 and a feedback resistor 196 is connected between the output 200 of the error amplifier 150 and the inverting input 192. A capacitor 202 is connected in series with the feedback resistor 196 between the output 200 of the error amplifier 150 and the inverting input 192 and an output resistor 204 is connected in series with the output 200 of the error amplifier 150 to further establish a time constant in the load current detector 24. Again, the load current detector 62 may be implemented in any suitable manner to measure the difference of the load current 154 and reference current 152, with a time constant or time constants being included in the load current detector 62 such that changes in the load current 154 due to pulses are disregarded while variations in the input voltage 16 other than any regular waveform of the input voltage 16 are tracked.

The output 200 from the error amplifier 150 is connected to the level shifter 74, in this case, an opto-isolator, through the output resistor 204 to shift the output 200 from a signal that is referenced to the local ground 86 to a signal 206 that is referenced to the circuit ground 84 or to another internal reference point in the variable pulse generator 20. A Zener diode 210 and series resistor 212 may be connected between the input voltage 16 and the input 208 of the level shifter 74 for overvoltage protection. If the voltage across load 64 rises excessively, the Zener diode 210 will conduct, turn on the level shifter 74 and reduce the pulse width or stop the pulses from the variable pulse generator 20. In this embodiment, there are thus two parallel control paths, the error amplifier 150 to the level shifter 74 and the overvoltage protection Zener diode 210 to the level shifter 74.

In some embodiments, the error amplifier 150 operates in an analog mode, although it is not limited to this example. During operation, as the load current 154 rises above the reference current 152 establishing the maximum allowable load current, the voltage at the output 200 of the error amplifier 150 increases, causing the variable pulse generator 60 to reduce the pulse width or stop the pulses from the variable pulse generator 20. As the output 200 of the error amplifier 150 rises, the pulse width becomes narrower and narrower until the pulses are stopped altogether from the variable pulse generator 20. The error amplifier 150 produces an output proportional to the difference between the average load current 154 and the reference current 152, where the reference current 152 is proportional to the average input voltage 16.

As discussed above, pulses from the variable pulse generator 60 turn on the switch 104, in this case a power FET via a resistor 214 to the gate of the FET 104. In this particular embodiment, a FET is utilized, however the present invention is not limited to the use of a FET or FETs and other types of switches such as, but not limited to, bipolar junction transistors (BJTs), junction FETs (JFETs), insulated gate bipolar transistors (IGBTs), all types of MOSFETs, NFETs, unijunction transistors, etc. made from any type of materials including semiconductors such as silicon, silicon carbide, gallium arsenide, gallium nitride, silicon germanium, indium phosphide, gallium aluminum arsenide, gallium aluminum nitride, etc. This allows current 154 to flow through the load 64 and capacitor 110, through the load current sense resistor 94, the inductor 112, the switch 104 and current sense resistor 114 to circuit ground 84. In between pulses, the switch 104 is turned off, and the energy stored in the inductor 112 when the switch 104 was on is released to resist the change in current. The current from the inductor 112 then flows through the diode 116 and back through the load 64 and load current sense resistor 94 to the inductor 112. Because of the time constant in the load current detector 24, the load current 154 monitored by the load current detector 62 is an average of the current through the switch 104 during pulses and the current through the diode 116 between pulses.

Again, the fluorescent replacement is not limited to use with the example LED driver 50 described above.

Note, additional diodes or bridges as illustrated and depicted in Fig. 4 may be used in any of the embodiments depicted in the remaining figures.

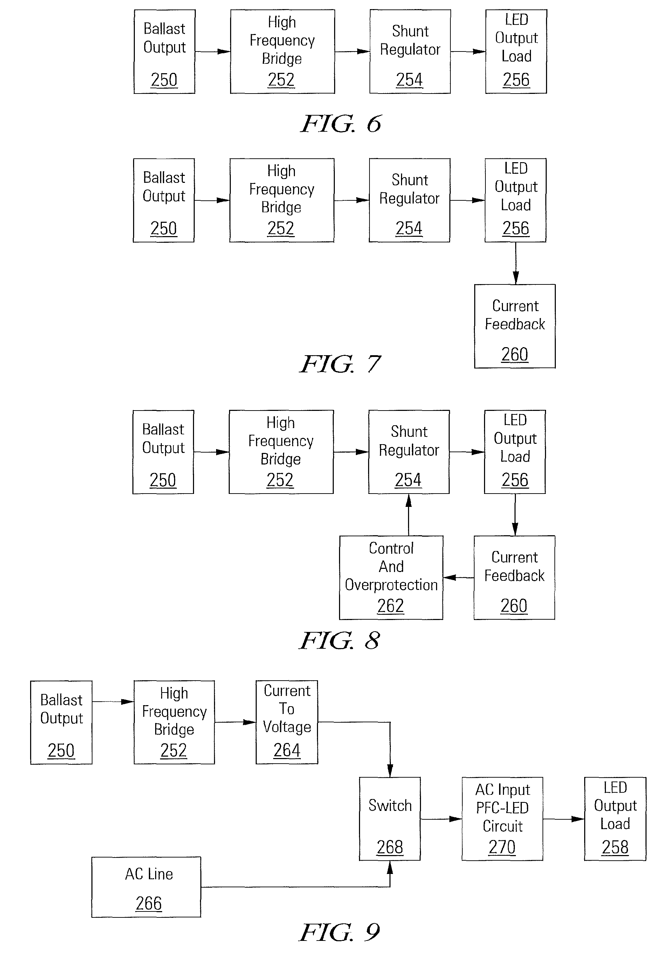

Fig. 6 depicts a simple block diagram of an example embodiment of the present invention with a high frequency diode bridge and a shunt regulator. A ballast output 250 is connected to a bridge 252, such as, but not limited to, a diode bridge rectifier. The resulting rectified power from the bridge 252 is provided to a shunt regulator 254 or other type of regulator to generate a regulated current for an output load 256. In some embodiments, the shunt regulator 254 generates a constant current, in some cases based on feedback from the load output to control the current, power, voltage, power factor, etc.

Fig. 7 depicts a simple block diagram of an example embodiment of a fluorescent lamp LED replacement with power drawn from a ballast output 250, and with a high frequency diode bridge(or bridges) 252, a shunt regulator 254 and current feedback 260.

Fig. 8 depicts a simple block diagram of an example embodiment of a fluorescent lamp LED replacement with power drawn from a ballast output 250, and with a high frequency diode bridge(or bridges) 252, a shunt regulator 254 and current feedback 260 and with additional over-protection 262 and current control feedback.

Fig. 9 depicts a block diagram of an example embodiment of a fluorescent lamp LED replacement that can operate and receive power either from a ballast 250 or from the AC line voltage 266 with a high frequency diode bridge (or bridges) 252 and a current to voltage converter 264 that can be switched to operate an LED driver 270 should a ballast 250 be used with the present invention or used with AC input voltage 266 applied to the fluorescent fixture terminals. A switch 268 selects either ballast output 250 or AC line 266, either using automatic or manual switching control, or a combination thereof.

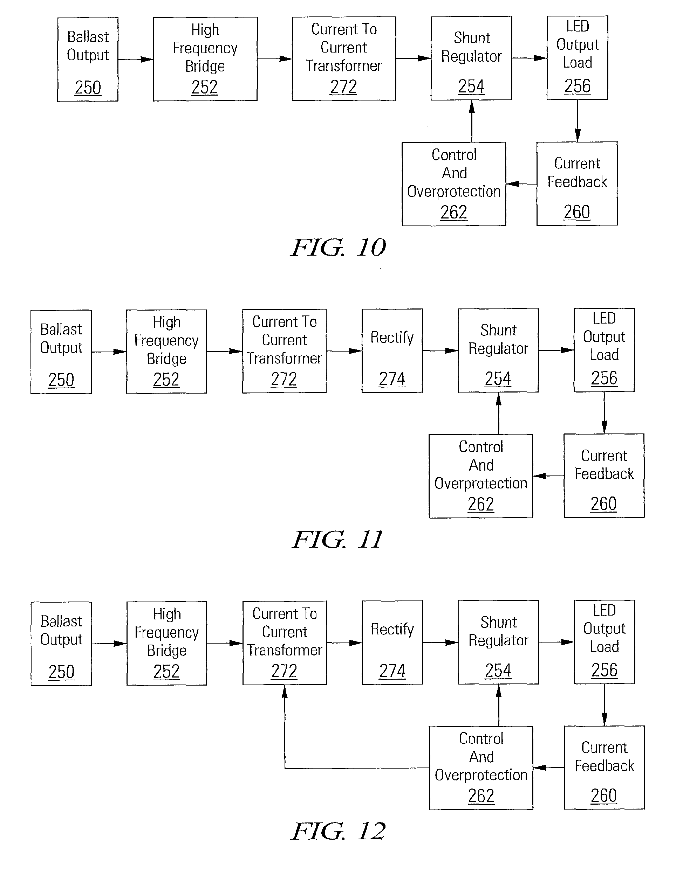

Fig. 10 depicts a simple block diagram of an example embodiment of a fluorescent lamp LED replacement with power drawn from a ballast output 250, and with a high frequencydiode bridge(or bridges) 252, a current to current transformer (or transformation) 272, a shunt regulator 254 and current feedback 260 and with additional over-protection 262 and current control feedback.

Fig. 11 depicts a simple block diagram of an example embodiment of a fluorescent lamp LED replacement with power drawn from a ballast output 250, and with a high frequency diode bridge (or bridges) 252, a current to current transformer (or transformation) 272 that feeds a rectification stage 274 with a shunt regulator 254 and associated feedback and control 262 to set the current of a LED output load 256 where the feedback and control information is fed back to the shunt regulator 254.

Fig. 12 depicts a block diagram of an example embodiment of a fluorescent lamp LED replacement with a high frequency diode bridge (or bridges) 252 and a current to current transformer (or transformation) 272 with a shunt regulator 254 and associated feedback and control 262 to set the current of a LED output load 256 where the feedback and control information 262 is also fed back to the current to current transformation stage 272 and the rectification stage 274.

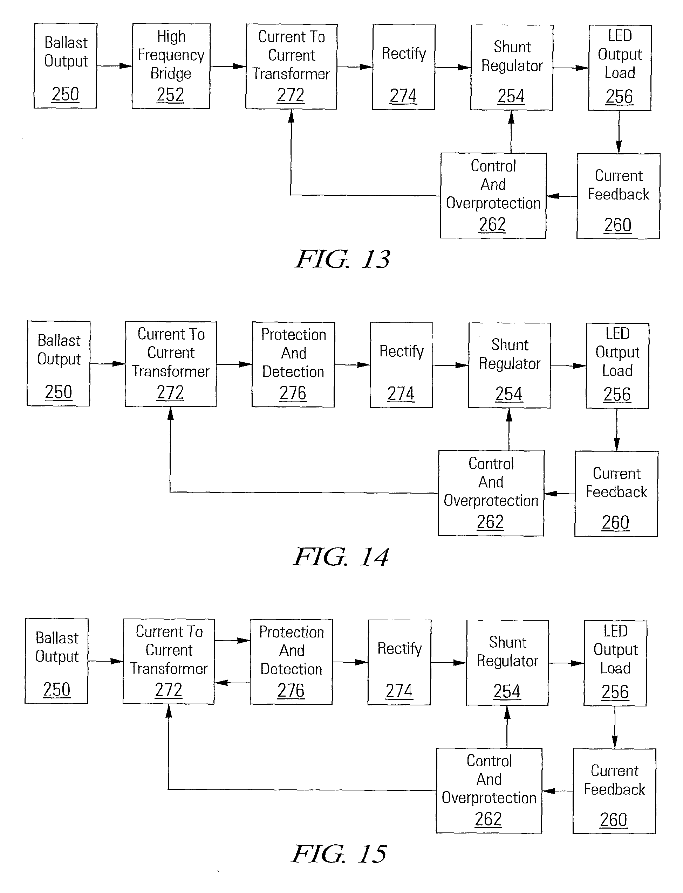

Fig. 13 depicts a block diagram of an example embodiment of a fluorescent lamp LED replacement with a high frequency diode bridge (or bridges) 252 and a current to current transformer (or transformation) 272 with a shunt regulator 254 and associated feedback and control 262 to set the current of a LED output load 256 where the feedback and control information 262 is also fed back to the current to current transformation stage 272 and the shunt regulator 254.

Fig. 14 depicts a block diagram of an example embodiment of a fluorescent lamp LED replacement with a high frequency diode bridge (or bridges) 252 and a current to current transformer (or transformation) 272 having protection and detection 276 with a shunt regulator 254 and associated feedback and control 262 to set the current of a LED output load 256 where the feedback and control information 262 is also fed back to the current to current transformation stage 272 and the shunt regulator 254. The protection and detection 276 can include, but is not limited to, current, voltage, and/or power over limit or under limit conditions, based on instantaneous and/or average measurements, can detect power quality issues, power factor issues, can protect against EMI, etc.

Fig. 15 depicts a block diagram of an example embodiment of a fluorescent lamp LED replacement with a high frequency diode bridge (or bridges) 252 and a current to current transformer (or transformation) 272 having protection and detection 276 with a shunt regulator 254 and associated feedback and control 262 to set the current of a LED output load 256 where the feedback and control information 262 is also fed back to the current to current transformation stage 272 and the shunt regulator 254 as well as from the protection and detection stage 276.

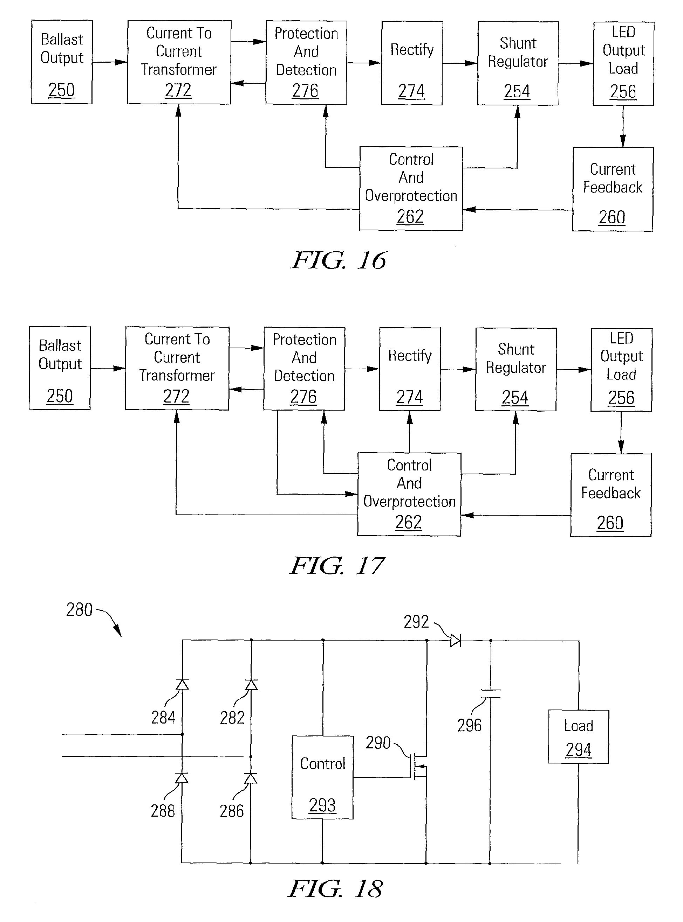

Fig. 16 depicts a block diagram of an example embodiment of a fluorescent lamp LED replacement with a high frequency diode bridge (or bridges) 252 and a current to current transformer (or transformation) 272 having protection and detection 276 with a shunt regulator 254 and associated feedback and control 262 to set the current of a LED output load 256 where the feedback and control information 262 is also fed back to the current to current transformation stage 272, the protection and detection 276, and the shunt regulator 254 as well as from the protection and detection stage 276.

Fig. 17 depicts a block diagram of an example embodiment of a fluorescent lamp LED replacement with a high frequency diode bridge (or bridges) 252 and a current to current transformer (or transformation) 272 having protection and detection 276 with a shunt regulator 254 and associated feedback and control 262 to set the current of a LED output load 256 where the feedback and control information 262 is also fed back to one or more of the current to current transformation stage 272, rectify stage 274 and the shunt regulator 254 as well as from the protection and detection stage 276. Feedback, protection response, etc. can come from and go to one or more of the blocks depicted in Fig. 17.

Fig. 18 depicts an example embodiment of a ballast driver 280 for a fluorescent lamp LED replacement. Diodes 282, 284, 286, 288 are high frequency diodes that form a high frequency full wave rectification bridge. Additional diodes or bridges may be included as needed or desired. Transistor 290 acts as a shunt switch to shunt current from the ballast as needed or required for a particular application and also serves as a protection against over-current including over-current transients, controlled by controller 293 using any suitable control scheme. Diode 292 prevents the shorting of the load (LEDs) 294 when switch 290 is turned on and shorts (shunts) the ballast. Diode 292 is a diode that, for example, may be used in some implementations of the present invention when used with electronic and other types of ballasts. Capacitor 296 represents optional capacitance and may consist of one or more capacitors.

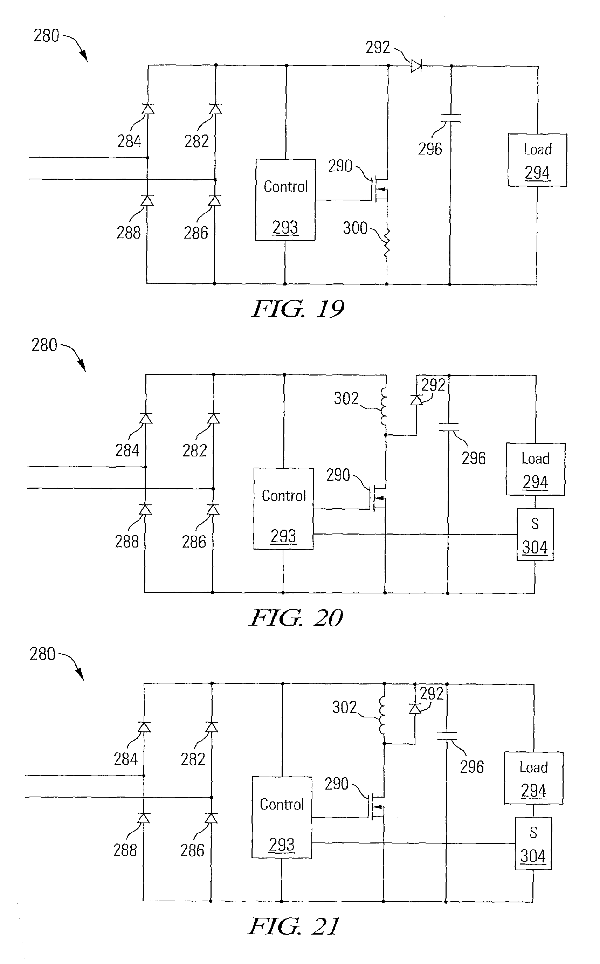

Fig. 19 depicts an example embodiment of a ballast driver 280 for a fluorescent lamp LED replacement. Diodes 282, 284, 286, 288 are high frequency diodes that form a high frequency full wave rectification bridge. Additional diodes or bridges may be included as needed or desired. Transistor 290 acts as a shunt switch and/or current regulator to shunt current from the ballast as needed or required for a particular application and also serves as a protection against over-current including over-current transients, controlled by controller 293 using any suitable control scheme. Diode 292 prevents the shorting of the load (LEDs) 294 when switch 290 is turned on and shorts (shunts) the ballast. In some embodiments of the present invention, providing parallel shunting paths and regulation including parallel current regulation is used as part of the current control/constant current control. Capacitor 296 represents optional capacitance and may consist of one or more capacitors. Resistor 300 is an optional resistor that acts as a current sense. Resistor 300 could be replaced with any other type of current sense element including but not limited to current sense transformers, current transformers, sense transistors, etc.

Fig. 20 depicts an example embodiment of a ballast driver 280 for a fluorescent lamp LED replacement. Diodes 282, 284, 286, 288 are high frequency diodes that form a high frequency full wave rectification bridge. Additional diodes or bridges may be included as needed or desired. Transistor 290 acts as a shunt switch to shunt current from the ballast as needed or required for a particular application and also serves as a protection against over-current including over-current transients, controlled by controller 293 using any suitable control scheme. Diode 292 prevents the shorting of the load (LEDs) 294 when switch 290 is turned on and shorts (shunts) the ballast. Capacitor 296 represents optional capacitance and may consist of one or more capacitors. Inductor 302 is an optional inductor. Sensor 304 is an optional sense element which could be a resistor that acts as a current sense. Sensor 304 could be any type of current sense element including but not limited to current sense transformers, current transformers, sense transistors, etc.

Fig. 21 depicts an example embodiment of a ballast driver 280 for a fluorescent lamp LED replacement. Diodes 282, 284, 286, 288 are high frequency diodes that form a high frequency full wave rectification bridge. Additional diodes or bridges may be included as needed or desired. Transistor 290 acts as a shunt switch to shunt current from the ballast as needed or required for a particular application and also serves as a protection against over-current including over-current transients, controlled by controller 293 using any suitable control scheme. Diode 292 prevents the shorting of the load (LEDs) 294 when switch 290 is turned on and shorts (shunts) the ballast. Capacitor 296 represents optional capacitance and may consist of one or more capacitors. Inductor 302 is an optional inductor. Sensor 304 is an optional sense element which could be a resistor that acts as a current sense. Sensor 304 could be any type of current sense element including but not limited to current sense transformers, current transformers, sense transistors, etc.

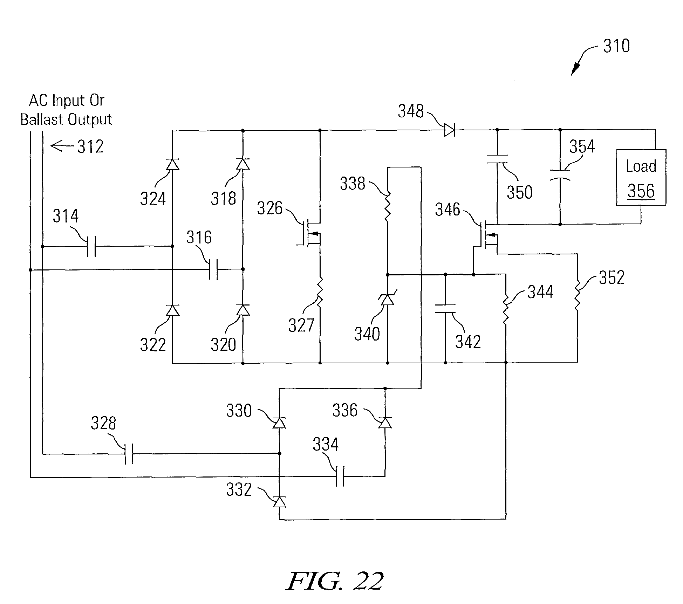

Fig. 22 depicts an example embodiment of a ballast driver 310 for a fluorescent lamp LED replacement. Diodes 318, 320, 322, 324 are high frequency diodes that form a high frequency full wave rectification bridge, connected to an AC input or ballast output 312. Additional diodes or bridges may be included as needed or desired. Capacitors 314, 316 act as high impedance elements at low frequencies including, for example, at or around 50 or 60 Hz and limit the current that can be passed to the high frequency bridge and the rest of the circuit/driver. Transistor 326 acts as a shunt switch to shunt current from the ballast as needed or required for a particular application and also serves as a protection against over-current including over-current transients. Diode 348 prevents the shorting of the load (LEDs) when transistor 326 is turned on and shorts (shunts) the ballast by, for example, a controller, which for the present invention including these figures can be pulse width modulated (PWM) or other or both or combinations of PWM and others (Controller omitted for clarity in Fig. 22). Capacitors 350, 354 represent optional capacitance and may consist of one or more capacitors. Resistors 327 and 352 are optional sense elements which could be resistors that act as current sensors. Current sensors 327 and 352 could also be any type of current sense element including but not limited to current sense transformers, current transformers, sense transistors, etc. Capacitors 328, 334, diodes 330, 332 and 336 form a frequency detection circuit such that an appreciable and useful voltage is developed, for example, across resistor 344 and capacitor 342 to drive and turn on transistor 346 when the frequency of the input 312 is high (i.e., kHz) and has a small voltage that is insufficient to drive and turn on transistor 346 for frequencies, for example, in the range of 47 to 63 Hz or, also for example, 400 Hz. Although a MOSFET is shown for transistor 326, any type of switch, transistor, vacuum tube, semiconductor device, etc. may be used for transistor 326. Resistor 338 and Zener diode 340 provide a voltage limit protection. Additional elements including but not limited to additional diodes, diode bridges, capacitors, resistors, etc. may be added/incorporated/etc. into the frequency detection circuitry (detector). The frequency detection circuit may be any type of circuit, integrated circuit (IC), microchip(s), microcontroller, microprocessor, digital signal processor (DSP), application specific IC (ASIC), field gate programmable array (FPGA), complex logic device (CLD), analog and/or digital circuit, system, component(s), filters, etc. including, but not limited to, any method to detect frequency including low-pass, high-pass, band-pass, notch filters of any order. Audio detectors and sensors, sound sensors and detectors, frequency to voltage converters, tone detectors, any form and type of frequency detection, etc. and combinations of these may be used. In addition, voltage and/or current detect circuits may be used in place of or to augment the frequency detect circuit. The frequency detect circuit can detect and discriminate low frequency (i.e., 47 to 63 Hz, 400 Hz) AC input line frequencies from, for example, kHz (i.e., typically above 32 kHz and often above 40 kHz electronic ballast output frequencies).

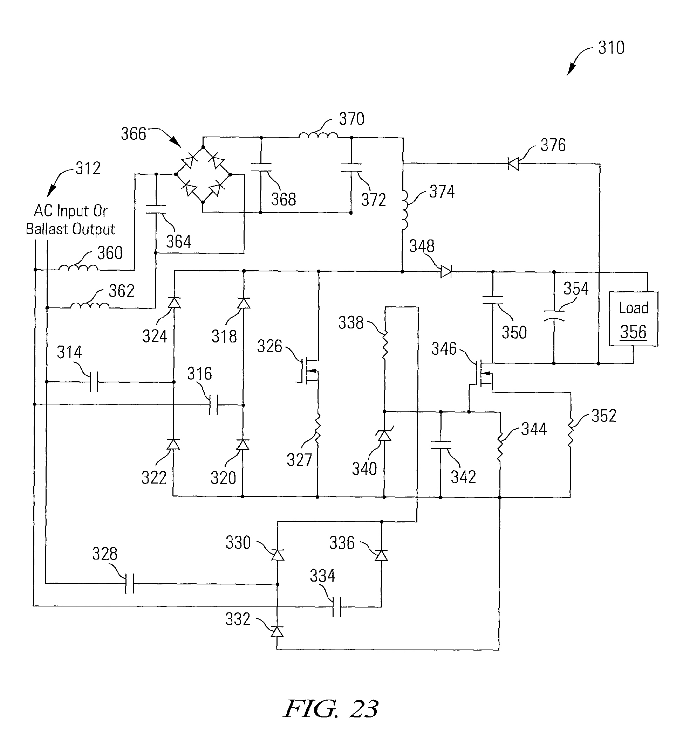

Fig. 23 depicts an example embodiment of a ballast and universal AC input driver for a fluorescent lamp LED replacement. Diode 366 is a full wave rectifier bridge. Additional diodes or bridges may be included as needed or desired. Additional diodes or bridges may be included as needed or desired. Inductors 360, 362, 370 along with capacitors 364, 368, 372 symbolically represent an EMI filter which could also include chokes, resistors, other capacitors, inductors, etc. and other arrangements, implementations, etc. Other EMI filters could be used as needed on other parts of the input or output parts of the schematic shown in Fig. 23. Inductor 374, transistor 326 and diode 348 form, for example, a buck-boost converter. Diode 376 provides a return path for the buck-boost. Although a buck-boost is illustrated, any type of converter, including, but not limited to, buck, boost, boost-buck, Cuk, SEPIC, flyback, forward-converter, etc. may be used. Diodes 318, 320, 322, 324 are high frequency diodes that form a high frequency full wave rectification bridge. Capacitors 314, 316 act as high impedance elements at low frequencies including, for example, at or around 50 or 60 Hz and limit the current that can be passed to the high frequency bridge and the rest of the circuit/driver. Transistor 326 acts as a shunt switch to shunt current from the ballast as needed or required for a particular application and also serves as a protection against over-current including over-current transients. Diode 348 prevents the shorting of the load (LEDs) when 346 is turned on and shorts (shunts) the ballast (Controller omitted for clarity in Fig. 18). Capacitors 350, 354 represent optional capacitance and may consist of one or more capacitors. Resistors 327 and 352 are optional sense elements which could be resistors that act as current sensors. Current sensors 327 and 352 could also be any type of current sense element including but not limited to current sense transformers, current transformers, sense transistors, etc. Capacitors 328, 334, diodes 330, 332 and 336 form a frequency detection circuit such that an appreciable and useful voltage is developed, for example, across resistor 344 and capacitor 342 to drive and turn on transistor 346 when the frequency of the input 312 is high (i.e., kHz) and has a small voltage that is insufficient to drive and turn on transistor 346 for frequencies, for example, in the range of 47 to 63 Hz or, also for example, 400 Hz. Although a MOSFET is shown for transistor 326, any type of switch, transistor, vacuum tube, semiconductor device, etc. may be used for transistor 326. Resistor 338 and Zener diode 340 provide a voltage limit protection. Additional elements including but not limited to additional diodes may be added/incorporated/etc. into the frequency detection circuitry (detector). The frequency detection circuit may be any type of circuit, integrated circuit (IC), microchip(s), microcontroller, microprocessor, digital signal processor (DSP), application specific IC (ASIC), field gate programmable array (FPGA), complex logic device (CLD), analog and/or digital circuit, system, component(s), filters, etc. including, but not limited to, any method to detect frequency including low-pass, high-pass, band-pass, notch filters of any order. Audio detectors and sensors, sound sensors and detectors, frequency to voltage converters, tone detectors, any form and type of frequency detection, etc. and combinations of these may be used. In addition, voltage and/or current detect circuits may be used in place of or to augment the frequency detect circuit. The frequency detect circuit can detect and discriminate low frequency (i.e., 47 to 63 Hz, 400 Hz) AC input line frequencies from, for example, kHz (i.e., typically above 32 kHz and often above 40 kHz electronic ballast output frequencies).

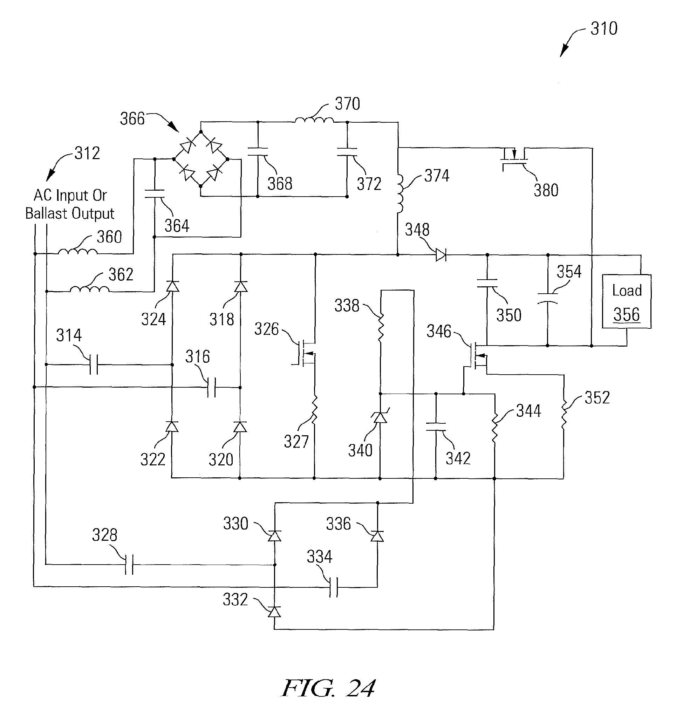

Fig. 24 depicts an example embodiment of a ballast and universal AC input driver for a fluorescent lamp LED replacement. Diode 366 is a full wave rectifier bridge. Additional diodes or bridges may be included as needed or desired. Inductors 360, 362, 370 along with capacitors 364, 368, 372 symbolically represent an EMI filter which could also include chokes, resistors, other capacitors, inductors, transistors, switches, integrated circuits, diodes, etc. and other arrangements, implementations, etc. In some embodiments a transistor, including a series transistor or, alternatively stated, a transistor in series can be used to reduce EMI. Other EMI filters could be used as needed on other parts of the input or output parts of the schematic shown in Fig. 24. Inductor 374, transistor 326 and diode 348 form, for example, a buck-boost converter. Diode 376 in Fig. 23 has been replaced with switch 380 in Fig. 19 which provides a return path for the buck-boost when in the AC line voltage mode. Although a buck-boost is illustrated, any type of converter, including, but not limited to, buck, boost, boost-buck, Cuk, SEPIC, flyback, forward-converter, etc. may be used. Diodes 318, 320, 322, 324 are high frequency diodes that form a high frequency full wave rectification bridge. Capacitors 314, 316 act as high impedance elements at low frequencies including, for example, at or around 50 or 60 Hz and limit the current that can be passed to the high frequency bridge and the rest of the circuit/driver. Transistor 326 acts as a shunt switch to shunt current from the ballast as needed or required for a particular application and also serves as a protection against over-current including over-current transients. Diode 348 prevents the shorting of the load (LEDs) 356 when transistor 326 is turned on and shorts (shunts) the ballast (Controller omitted for clarity in Fig. 24). Capacitors 350, 354 represent optional capacitance and may consist of one or more capacitors. Sense elements 327, 352 are optional sense elements which could be resistors that act as a current sensor. In many embodiments of the present invention current sensors are used. Sense elements 327, 352 could also be any type of current sense element including but not limited to current sense transformers, current transformers, sense transistors, etc. Capacitors 328, 334 and diodes 330, 332, 336 form a frequency detection circuit such that an appreciable and useful voltage is developed, for example, across resistor 344 and capacitor 342 to drive and turn on transistor 346 when the frequency of the input is high (i.e., kHz) and has little voltage insufficient to drive and turn on transistor 346 for frequencies, for example, in the range of 47 to 63 Hz or, also for example, 400 Hz. Although a MOSFET is shown for transistors 326, 346 380, any type of switch, transistor, vacuum tube, semiconductor device, etc. may be used for 326, 346 and/or 380. Resistor 338 and Zener diode 340 provide a voltage limit protection. Switch 346 is used in the ballast mode and provides the return path for the ballast mode. Additional elements including but not limited to additional diodes may be added/incorporated/etc. into the frequency detection circuitry (detector). The frequency detection circuit may be any type of circuit, integrated circuit (IC), microchip(s), microcontroller, microprocessor, digital signal processor (DSP), application specific IC (ASIC), field gate programmable array (FPGA), complex logic device (CLD), analog and/or digital circuit, system, component(s), filters, etc. including, but not limited to, any method to detect frequency including low-pass, high-pass, band-pass, notch filters of any order. In addition, voltage and/or current detect circuits may be used in place of or to augment the frequency detect circuit. The frequency detect circuit can detect and discriminate low frequency (i.e., 47 to 63 Hz, 400 Hz) AC input line frequencies from, for example, kHz (i.e., typically above the audio frequencies and usually above 32 kHz and often above 40 kHz electronic ballast output frequencies).

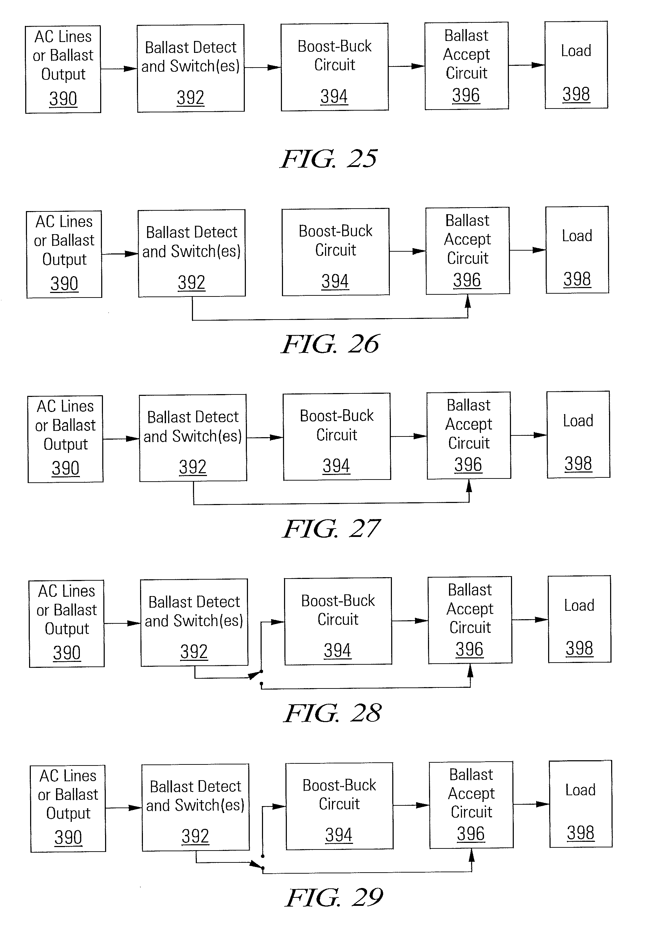

Fig. 25 depicts a block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load 398 (which typically is a LED or OLED array) with ballast detect and switches 392, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, etc., a ballast accept circuit 396 including those illustrated in the previous figures, and a load 398 (i.e., LED or OLED). The example embodiment illustrated in Fig. 25 could also include items such as a current to current transformer (or transformation) having protection and detection with a shunt regulator and associated feedback and control to set the current of a LED output load where the feedback and control information is also fed back to other parts of the driver. Additional diodes or bridges may be included as needed or desired.

Fig. 26 depicts a block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load 398 (which typically is a LED or OLED array) with the switch(es) set for ballast mode with ballast detect and switches 392, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, etc., a ballast accept circuit 396 including those illustrated in the previous figures, and a load 398 (i.e., LED or OLED). The example embodiment illustrated in Fig. 25 could also include items such as a current to current transformer (or transformation) (or similar such function including current paralleling or current regulation) having protection and detection with a shunt regulator and associated feedback and control to set the current of a LED output load where the feedback and control information is also fed back to other parts of the driver.

Fig. 27 depicts a block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load 398 (which typically is a LED or OLED array) with the switch(es) set for boost-buck mode with ballast detect and switches 392, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, series and/or parallel regulation, etc., a ballast accept circuit including those illustrated in the previous figures, and a load (i.e., LED or OLED). The example embodiment illustrated in Fig. 25 could also include items such as a current to current transformer (or transformation) having protection and detection with a shunt regulator (including other such methods discussed herein to control current) and associated feedback and control to set the current of a LED output load where the feedback and control information is also fed back to other parts of the driver.

Fig. 28 depicts another block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load 398 (which typically is a LED or OLED array) with the switch(es) set for boost-buck mode with ballast detect and switches 392, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, etc., a ballast accept circuit including those illustrated in the previous figures, and a load (i.e., LED or OLED). The example embodiment illustrated in Fig. 25 could also include items such as a current to current transformer (or transformation) having protection and detection with a shunt regulator and associated feedback and control (including other such methods discussed herein) to set the current of a LED output load where the feedback and control information is also fed back to other parts of the driver.

Fig. 29 depicts a block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load (which typically is a LED or OLED array) with the switch(es) set for ballast mode with ballast detect and switches 392, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, etc., a ballast accept circuit 396 including those illustrated in the previous figures, and a load 398 (i.e., LED or OLED). The example embodiment illustrated in Fig. 25 could also include items such as a current to current transformer (or transformation), etc. having protection and detection with a shunt regulator and associated feedback and control to set the current of a LED output load where the feedback and control information is also fed back to other parts of the driver.

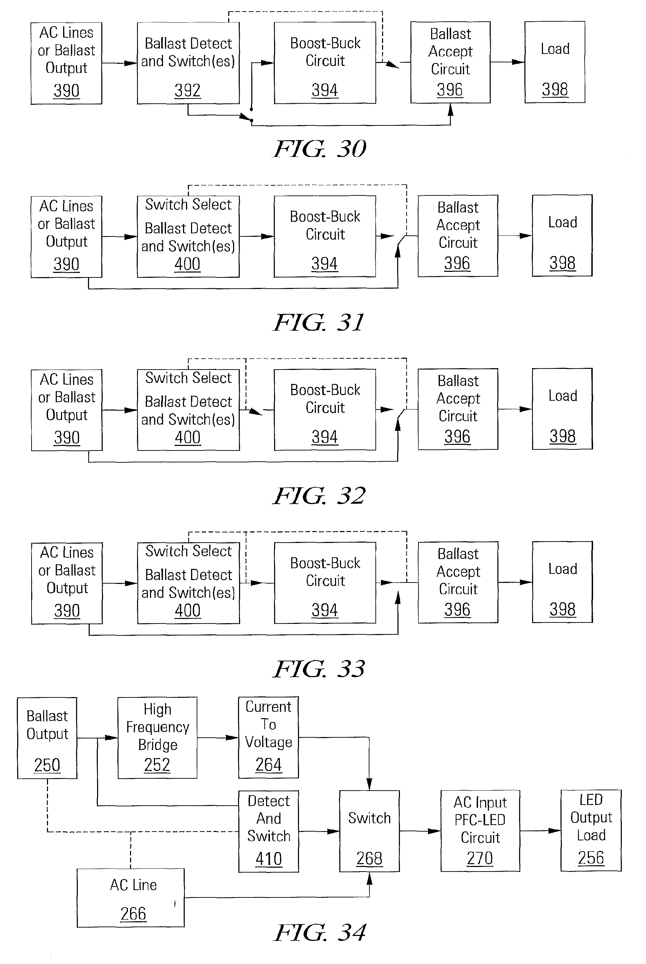

Fig. 30 depicts another block diagram of an example embodiment of a fluorescent lamp LED replacement that accepts either an AC lines input or a ballast output 390 including magnetic (normally low frequency) and electronic (normally high frequency) and supplies a constant current (or constant voltage depending on the implementation) to the load 398 (which typically is a LED or OLED array) with the switch(es) set for ballast mode with ballast detect and switches 392, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, series and/or current regulation, etc., a ballast accept circuit 396 including those illustrated in the previous figures, and a load 398 (i.e., LED or OLED). The example embodiment illustrated in Fig. 25 could also include items such as a current to current transformer (or transformation) or other methods of current sharing, current shunting, current paralleling, etc. having protection and detection with a shunt regulator and associated feedback and control to set the current of a LED output load where the feedback and control information is also typically fed back to other parts of the driver.

Fig. 31 depicts another block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load 398 (which typically is a LED or OLED array) with the switch(es) set for ballast mode with ballast detect and switches 400, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, series and/or parallel regulation, etc., a ballast accept circuit including those illustrated in the previous figures, and a load (i.e., LED or OLED). The example embodiment illustrated in Fig. 25 could also include items such as a current to current transformer (or transformation) or other methods, techniques, algorithms, approaches, etc. discussed herein having protection and detection with a shunt regulator and associated feedback and control to set the current of a LED output load where the feedback and control information is also fed back to other parts of the driver.

Fig. 32 depicts another block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load (which typically is a LED or OLED array) with the switch(es) set for ballast mode with ballast detect and switches 400, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, and/or other methods, approaches, techniques, ways, etc. discussed herein, etc., a ballast accept circuit including those illustrated in the previous figures, and a load (i.e., LED or OLED). The example embodiment illustrated in Fig. 25 could also include items such as a current to current transformer (or transformation) having protection and detection with a shunt regulator and associated feedback and control to set the current of a LED output load where the feedback and control information is also fed back to other parts of the driver.

Fig. 33 depicts another block diagram of an example embodiment of a fluorescent lamp LED replacement that accepts either an AC lines input or a ballast output 390 including magnetic (normally low frequency) and electronic (normally high frequency) and supplies a constant current (or constant voltage) to the load (which typically is a LED or OLED array) with the switch(es) set for boost-buck mode with ballast detect and switches, a high frequency diode bridge (or bridges) and a boost-buck circuit 394 (which could also be a buck, boost, buck-boost, Cuk, SEPIC, flyback, forward-converter, etc.) of any type, architecture, topology, etc. including, but not limited to, discontinuous conduction mode (DCM), continuous conduction mode (CCM), critical conduction mode (CRM), resonant conduction mode (RCM), synchronous, etc., and/or other methods, techniques, approaches, ways, etc. discussed herein, a ballast accept circuit including those illustrated in the previous figures, and a load (i.e., LED or OLED). The example embodiment illustrated in Fig. 25 could also include items such as a current to current transformer (or transformation) having protection and detection with a shunt regulator and associated feedback and control to set the current of a LED output load where the feedback and control information is also typically fed back to other parts of the driver.

Fig. 34 depicts a block diagram of an example embodiment of a fluorescent lamp LED replacement that can operate and receive power either from a ballast 250 or from the AC line voltage 266 with a high frequency diode bridge (or bridges) 252 and, for example, a current to voltage converter 264 that can be switched using switches and detection 410 to operate a LED driver 270 should a ballast 250 be used with the present invention or used with AC input voltage 266 applied to, for example, the fluorescent fixture terminals. Additional diodes or bridges may be included as needed or desired.

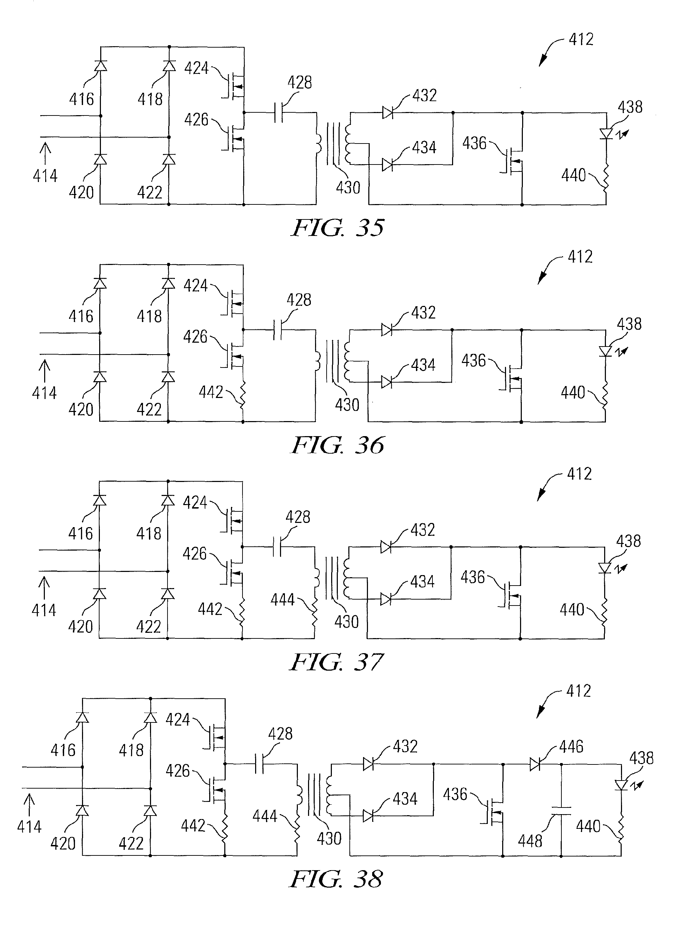

Fig. 35 depicts an example embodiment 412 of the present invention that accepts the output 414 from a ballast for a fluorescent lamp and, for example, converts the current to a different current value. High frequency diodes 416, 418, 420, 422 form a full wave rectifier bridge that accepts as input the output of the ballast. Additional diodes or bridges may be included as needed or desired. Transistors 424, 426 form a half bridge driver stage (note other types of stages including push-pull, forward converters, current fed, current mode, current fed, etc. can be used in place of the half bridge driver stage) that feeds the primary of transformer 430 via capacitor 428. High frequency diodes 432, 434 in conjunction with the center tapped secondary of 430 provide a rectified output to LED load 438. Transistor 436 acts as a shunt switch to shunt current as needed or required for a particular application and also serves as a protection against over-current including over-current transients (controller omitted for clarity in Fig. 35). The frequency of the square-wave converter/inverter can be any appropriate frequency which may, for example, be in the range of 20 kHz to 100 kHz, again, as an example. Although a square-wave converter is illustrated, any type of converter or inverter, including, but not limited to, buck, boost, boost-buck, Cuk, SEPIC, flyback, forward-converter, etc. and especially sine-wave converters/inverters including resonant sine wave converters/inverters may be used. An additional inductor may be needed for some of the sine wave converters/inverters or current fed, etc. Sense element 440 is a sense element which could be a resistor or resistors that act as a current sensor. Sense element 440 could also be any type of current sense element including but not limited to current sense transformers, current transformers, sense transistors, etc. Although a MOSFET is shown for transistors 424, 426, 436, any type of switch, transistor, vacuum tube, semiconductor device, etc. may be used for 424, 426, and/or 436. Additional elements including but not limited to additional diodes may be added/incorporated/etc. into the simplified circuit shown in Fig. 35. The control circuit(s) may be any type of circuit, integrated circuit (IC), microchip(s), microcontroller, microprocessor, digital signal processor (DSP), application specific IC (ASIC), field gate programmable array (FPGA), complex logic device (CLD), analog and/or digital circuit, system, component(s), filters, etc. including, but not limited to, any method to provide a switched signal such as a PWM drive signal to the switching devices. In addition, additional voltage and/or current detect circuits may be used in place of or to augment the control and feedback circuits.

Fig. 36 depicts an example embodiment of the present invention that accepts the output from a ballast for a fluorescent lamp and, for example, converts the current to a different current value. High frequency diodes 416, 418, 420, 422 form a full wave rectifier bridge that accepts as input the output of the ballast. Additional diodes or bridges may be included as needed or desired. Transistors 424, 426 form a half bridge driver stage (note other types of stages including, but not limited to, push-pull and other types of forward converters, flyback converters, etc. can be used in place of the half bridge driver stage) that feeds the primary of transformer 430 via capacitor 428. In addition, other embodiments of the present invention can use a single switching device such as a transistor or no switching device by using the switching action of the high frequency ballast to directly drive the primary side. High frequency diodes 432, 434 in conjunction with the center tapped secondary of 430 provide a rectified output to LED load 438. Transistor 436 acts as a shunt switch to shunt current as needed or required for a particular application and also serves as a protection against over-current including over-current transients (controller omitted for clarity in Fig. 35). The frequency of the square-wave converter/inverter can be any appropriate frequency which may, for example, be in the range of 20 kHz to 100 kHz, again, as an example. Although a square-wave converter is illustrated, any type of converter or inverter, including, but not limited to, buck, boost, boost-buck, Cuk, SEPIC, flyback, forward-converter, etc. and especially sine-wave converters/inverters including resonant sine wave converters/inverters may be used. An additional inductor may be needed for some of the sine wave converters/inverters. Sense elements 440, 442 are sense elements which could be resistors that act as current sensors. Sense elements 440, 442 could also be any type of current sense elements including but not limited to current sense transformers, current transformers, sense transistors, etc. Although a MOSFET is shown for transistors 424, 426, 436, any type of switch, transistor, vacuum tube, semiconductor device, etc. may be used for 424, 426, and/or 436. Additional elements including but not limited to additional diodes may be added/incorporated/etc. into the simplified circuit shown in Fig. 36. The control circuit(s) may be any type of circuit, integrated circuit (IC), microchip(s), microcontroller, microprocessor, digital signal processor (DSP), application specific IC (ASIC), field gate programmable array (FPGA), complex logic device (CLD), analog and/or digital circuit, system, component(s), filters, etc. including, but not limited to, any method to provide a switched signal such as a PWM drive signal to the switching devices. In addition, additional voltage and/or current detect circuits may be used in place of or to augment the control and feedback circuits.

Fig. 37 depicts an example embodiment of the present invention that accepts the output from a ballast for a fluorescent lamp and, for example, converts the current to a different current value. High frequency diodes 416, 418, 420, 422 form a full wave rectifier bridge that accepts as input the output of the ballast. Additional diodes or bridges may be included as needed or desired. Transistors 424, 426 form a half bridge driver stage (note other types of stages including push-pull can be used in place of the half bridge driver stage) that feeds the primary of transformer 430 via capacitor 428. High frequency diodes 432, 434 in conjunction with the center tapped secondary of 430 provide a rectified output to LED load 438. Transistor 436 acts as a shunt switch to shunt current as needed or required for a particular application and also serves as a protection against over-current including over-current transients (controller omitted for clarity in Fig. 35). The frequency of the square-wave converter/inverter can be any appropriate frequency which may, for example, be in the range of 20 kHz to 100 kHz, again, as an example. Although a square-wave converter is illustrated, any type of converter or inverter, including, but not limited to, buck, boost, boost-buck, Cuk, SEPIC, flyback, forward-converter, etc. and especially sine-wave converters/inverters including resonant sine wave converters/inverters may be used. An additional inductor may be needed for some of the sine wave converters/inverters.

In addition, other embodiments of the present invention can use a single switching device such as a transistor or no switching device by using the switching action of the high frequency ballast to directly drive the primary side. Embodiments of the present invention can provide a constant current driver that takes a current input from the ballast output and can transform, reduce, use as is, increase by further switching action such as a buck, boost, buck-boost, boost-buck, flyback, forward converter of any type, etc. Certain embodiments of the present invention can work with and operate/receive power from an electronic ballast, a universal AC input, a magnetic ballast, all of these or a subset of these.

Sense elements 440, 442, 444 are sense elements which could be resistors that act as current sensors. Sense elements 440, 442, 444 could also be any type of current sense elements including but not limited to current sense transformers, current transformers, sense transistors, etc. Although a MOSFET is shown for transistors 424, 426, 436, any type of switch, transistor, vacuum tube, semiconductor device, etc. may be used for 424, 426, and/or 436. Additional elements including but not limited to additional diodes may be added/incorporated/etc. into the simplified circuit shown in Fig. 37. The control circuit(s) may be any type of circuit, integrated circuit (IC), microchip(s), microcontroller, microprocessor, digital signal processor (DSP), application specific IC (ASIC), field gate programmable array (FPGA), complex logic device (CLD), analog and/or digital circuit, system, component(s), filters, etc. including, but not limited to, any method to provide a switched signal such as a PWM drive signal to the switching devices. In addition, additional voltage and/or current detect circuits may be used in place of or to augment the control and feedback circuits.

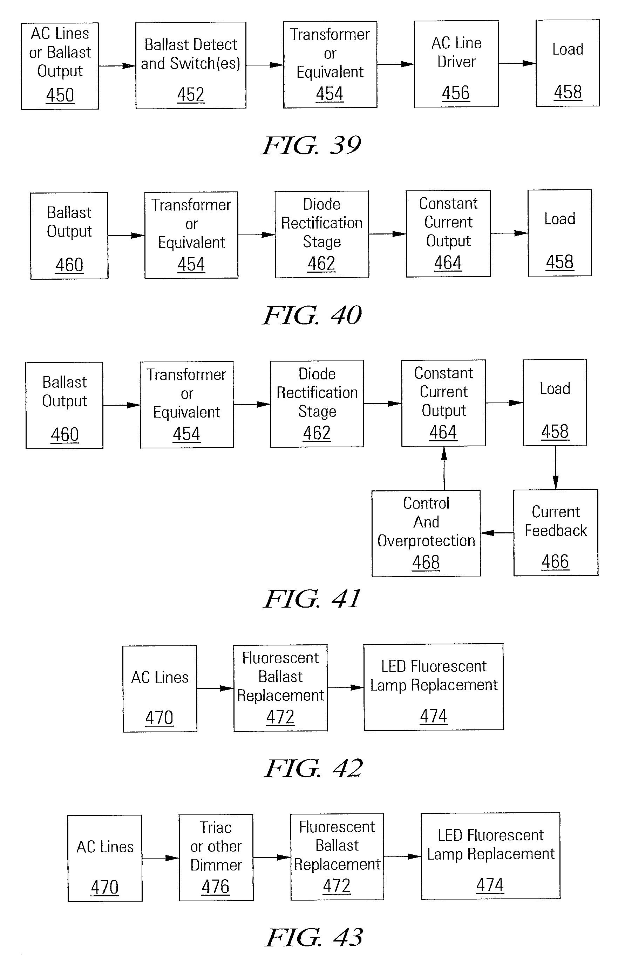

Fig. 38 depicts an example embodiment of the present invention that accepts the output from a ballast for a fluorescent lamp and, for example, converts the current to a different current value. High frequency diodes 416, 418, 420, 422 form a full wave rectifier bridge that accepts as input the output of the ballast. Additional diodes or bridges may be included as needed or desired. Transistors 424, 426 form a half bridge driver stage (note other types of stages including push-pull can be used in place of the half bridge driver stage) that feeds the primary of transformer 430 via capacitor 428. High frequency diodes 432, 434 in conjunction with the center tapped secondary of 430 provide a rectified output to LED load 438. Transistor 436 acts as a shunt switch to shunt current as needed or required for a particular application and also serves as a protection against over-current including over-current transients (controller omitted for clarity in Fig. 39). The frequency of the square-wave converter/inverter can be any appropriate frequency which may, for example, be in the range of 20 kHz to 100 kHz, again, as an example. Although a square-wave converter is illustrated, any type of converter or inverter, including, but not limited to, buck, boost, boost-buck, Cuk, SEPIC, flyback, forward-converter, etc. and especially sine-wave converters/inverters including resonant sine wave converters/inverters may be used. An additional inductor may be needed for some of the sine wave converters/inverters.

In addition, other embodiments of the present invention can use a single switching device such as a transistor or no switching device by using the switching action of the high frequency ballast to directly drive the primary side such as the primary side of a transformer.

Sense elements 440, 442, 444 are sense elements which could be resistors that act as current sensors. Sense elements 440, 442, 444 could also be any type of current sense elements including but not limited to current sense transformers, current transformers, sense transistors, etc. Although a MOSFET is shown for transistors 424, 426, 436, any type of switch, transistor, vacuum tube, semiconductor device, etc. may be used for 424, 426, and/or 436. Diode 446 prevents the shorting of the load (LEDs) when transistor 436 is turned on and shorts (shunts) the ballast (Again, controller omitted for clarity in Fig. 38). As with the other example embodiments shown herein, current regulators, parallel current paths, etc. may also be used. Optional capacitor 448 represents one or more capacitors that can be used to provide filtering to reduce the ripple that LED array 438 experiences. In addition, inductance (i.e., inductors) can be added to also provide additional filtering and support continuous current through LED array 438. Additional elements including but not limited to additional diodes may be added/incorporated/etc. into the simplified circuit shown in Fig. 38. The control circuit(s) may be any type of circuit, integrated circuit (IC), microchip(s), microcontroller, microprocessor, digital signal processor (DSP), application specific IC (ASIC), field gate programmable array (FPGA), complex logic device (CLD), analog and/or digital circuit, system, component(s), filters, etc. including, but not limited to, any method to provide a switched signal such as a PWM drive signal to the switching devices. In addition, additional voltage and/or current detect circuits may be used in place of or to augment the control and feedback circuits.

Fig. 39 depicts a block diagram of an example embodiment of a fluorescent lamp LED replacement that accepts either an AC lines input or a ballast output 450 including magnetic (normally low frequency) and electronic (normally high frequency) and supplies a constant current (or constant voltage) to the load (which typically is a LED or OLED array) with ballast detect and switches 452, a transformer or equivalent 454 that provides an output, which could be a rectified AC to DC output or an AC output, that is fed into a driver 456 of any suitable type, including those illustrated in the previous figures, which could include a high frequency rectification stage that feeds a constant current (or voltage) to a load 458 (i.e., LED or OLED). The example embodiment illustrated in Fig. 39 includes a current to current transformer (or transformation or equivalent) including variants discussed herein that may have protection and detection with a shunt regulator and associated feedback and control to set the current of a LED output load where the feedback and control information is also fed back to other parts of the driver. Additional diodes or bridges may be included as needed or desired.

Fig. 40 depicts a simple block diagram of an example embodiment of a fluorescent lamp LED replacement that accepts the output of a ballast 460 and converts the ballast current via a transformer or transformer equivalent 454 that provides an output to a high frequency diode rectification stage 462 which then feeds a constant current stage 464 which may be a shunt regulator to provide constant current to, for example, a LED load 458. Embodiments of the present invention can use a single switching device such as a transistor or no switching device by using the switching action of the high frequency ballast to directly drive the primary side.

Fig. 41 depicts a simple block diagram of an example embodiment of a fluorescent lamp LED replacement that accepts the output of a ballast 460 and converts the ballast current via a transformer or transformer equivalent 454 that provides an output to a high frequency diode rectification stage 454 which then feeds a constant current stage 464 which may be a shunt regulator including current feedback 466 to provide constant current to, for example, an LED and/or OLED load 458 which may consist of one or more LEDs and/or OLEDs. Although not shown in Fig. 41, additional over-protection 468 and current control feedback and associated detection, monitor, feedback and control may be included and provided. Additional diodes or bridges may be included as needed or desired. Embodiments of the present invention can use a single switching device such as a transistor or no switching device by using the switching action of the high frequency ballast to directly drive the primary side.

Notably, in the embodiments disclosed herein, such as those in Figs. 1-41, AC inputs to circuits may comprise a signal from a triac or other conditioning or processing device or circuit, such as but not limited to a triac dimmer connected to an AC source. In other words, AC lines in the diagrams can also be viewed as Triac, Triac-based, forward or reverse dimmers fed by the AC limes as the present invention also supports Triac and other types of dimming from the AC lines.

In some embodiments of the present invention, the shunt regulator is optional and the LED Fluorescent Lamp Replacement can be implemented to work without the shunt regulator and/or, for example a current-to-current transformer, etc. In some embodiments, the use of the present invention, embodiments of the present invention may consist of the use of high frequency diodes in conjunction with other potentially optional passive elements including, but not limited to, capacitors, and protection devices in addition to the LED or OLED load, etc. Embodiments of the present invention can use a multiple of single switching device(s) such as a transistor(s) or no switching device(s) by using the switching action of the high frequency ballast to directly drive the primary side of a transformer.

The ballast replacement in some embodiments can be designed to provide a specified constant output current, have a lower open circuit output voltage, be self-protecting including protecting against shock hazard, leakage current, etc., and/or have additional features and functions some of which are described herein.

Fig. 42 depicts a simple block diagram of an example embodiment of a fluorescent lamp LED replacement 474 that accepts the output of a ballast replacement 472. The ballast replacement is designed to replace an existing ballast with an electronic circuit that provides appropriate input to the fluorescent lamp LED replacement 474 which can be either or both a low frequency voltage or current or a high frequency voltage or current depending on the particular needs, applications, etc. Such a ballast replacement 472 would, in general, not be designed to drive a fluorescent tube (although some embodiments could and would do so) but, instead, drive and be optimized for use with the embodiments of the present invention that replace fluorescent tubes including embodiments of the present invention that only replace fluorescent tubes and are not designed to also be plugged directly to the AC lines 470. Such a ballast replacement can be used essentially universally for LED fluorescent tube replacements and can provide the constant current output from the AC mains. Such a ballast replacement can provide extremely high efficiency AC lines input to the ballast replace to output to fluorescent lamp LED replacement 474. Such a ballast replacement can be isolated or non-isolated and can use any topology, architecture, design, etc. including, but not limited to, buck, boost-buck, buck-boost, boost, fly-back, forward-converter, current fed/mode, voltage fed/mode, Cuk, SEPIC, discontinuous conduction mode, continuous conduction mode, critical conduction mode, resonant conduction mode, synchronous conduction mode, single stage, two stage, multistage, push-pull, half-bridge, full bridge, square-wave output, sine-wave output, resonant sine-wave, other waveforms, etc.

Fig. 43 depicts a simple block diagram of an example embodiment of a fluorescent lamp LED replacement 474 that accepts the output of a ballast replacement 472 that is Triac dimmable and incorporates all of the discussion above for the example embodiment shown in Fig. 41 in addition to be able to providing dimming capability that allows LED Fluorescent Lamp Replacements to be dimmed via the Triac, Triac-based, other forward or reverse dimmer 476, etc. input to the ballast replacement 472 that provides, for example, a output current to the fluorescent lamp LED replacement 474 that tracks and responds to the Triac or other types of dimmer of dimmer signals including in a linear, sub-linear, super-linear, quadratic, power-law, logarithmic, square-root, exponential, etc.

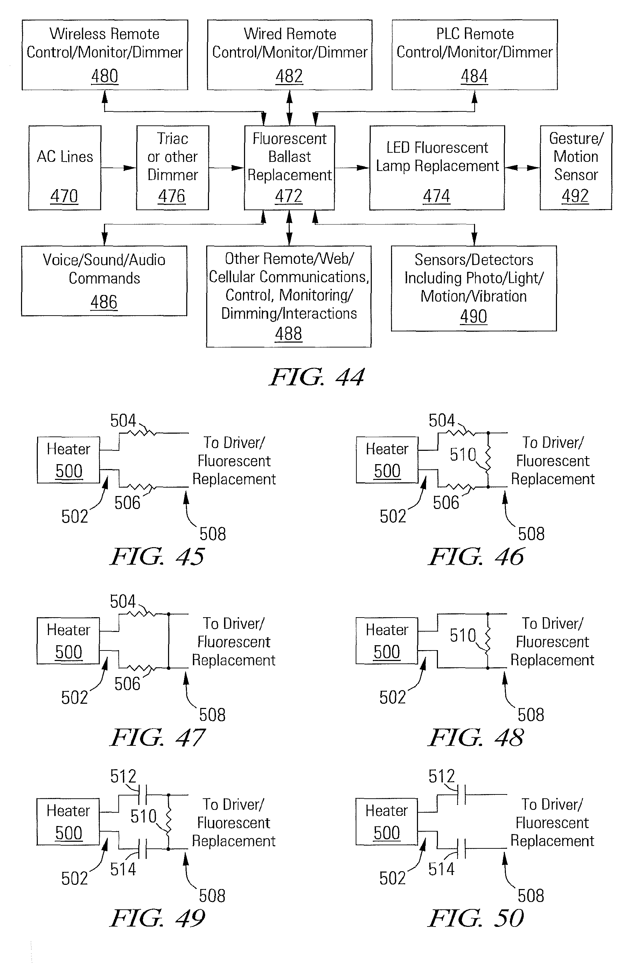

Fig. 44 depicts a simple block diagram of an example embodiment of a fluorescent lamp LED replacement 474 that accepts the output of a fluorescent ballast replacement 472 that is designed and intended for a LED Fluorescent Lamp Replacement that is remote dimmable and can also be Triac, Triac-based, forward and reverse dimmer 476 dimmable and incorporates all of the discussion above for the example embodiments in Figs. 42 and 43. The remote fluorescent lamp replacement ballast 472 can use or receive control signals/commands from, for example, but not limited to any or all of wired 482, wireless 480, optical 490, acoustic 486, voice, voice recognition, motion, light, sonar, gesturing, sound, mechanical, vibrational 490, and/or powerline connection (PLC), etc., combinations of these, etc. remote control, monitoring and dimming, motion detection/proximity detection/gesture detection 492, etc. An example powerline connection interface that can be used to control the fluorescent lamp LED replacement is disclosed in US Patent Application 14/218,905, filed March 18, 2014 for a "Powerline Control Interface", which is incorporated herein by reference for all purposes. In some embodiments, dimming or/other control can be performed using methods/techniques/approaches/algorithms/etc. that implement one or more of the following: motion detection, recognizing motion or proximity to a detector or sensor and setting a dimming level or control response/level in response to the detected motion or proximity, or with audio detection, for example detecting sounds or verbal commands to set the dimming level in response to detected sounds, volumes, or by interpreting the sounds, including voice recognition or, for example, by gesturing including hand or arm gesturing, etc. sonar, light, mechanical, vibration, detection and sensing, etc. Some embodiments may be dual or multiple dimming and/or control, supporting the use of multiple sources, methods, algorithms, interfaces, sensors, detectors, protocols, etc. to control and/or monitor including data logging, data mining and analytics. Some embodiments of the present invention may be multiple dimming or control (i.e., accept dimming information, input(s), control from two or more sources).

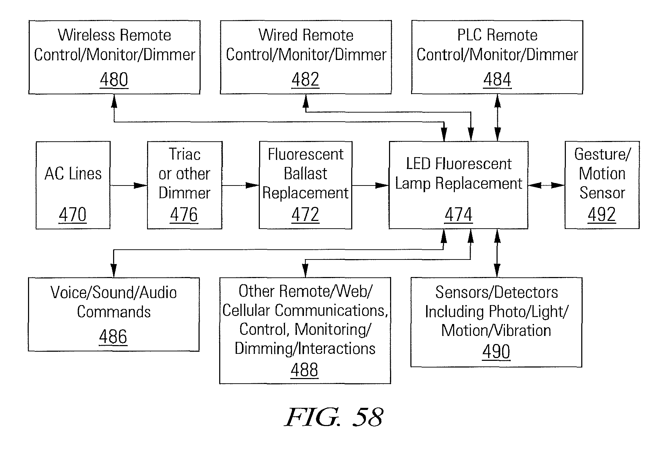

Remote interfaces 488 include, but are not limited to, 0 to 10 V, 0 to 2 V, 0 to 1 V, 0 to 3 V, etc., RS 232, RS485, DMX, WiFi, Bluetooth, ZigBee, IEEE 802, two wire, three wire, SPI, I2C, PLC, and others discussed in this document, etc. In various embodiments, the control signals can be received and used by the remote fluorescent lamp replacement ballast 472 as shown in Fig. 44, or by the LED fluorescent lamp replacement 474 as shown in Fig. 58, or both. Such a Remote Controlled Florescent Ballast Replacement can also support color LED Fluorescent Lamp Replacements including single and multi-color including RGB, White plus red-green-blue (RGB) LEDs or OLEDs or other lighting sources, RGB plus one or more colors, red yellow blue (RYB), other variants, etc. Color-changing/tuning can include more than one color including RGB, WRGB, RGBW, WRGBA where A stands for amber, etc. 5 color, 6 color, N color, etc. Color-changing/tuning can include, but is not limited to, white color-tuning including the color temperature tuning/adjustments/settings/etc., color correction temperature (CCT), color rendering index (CRI), etc. Color rendering, color monitoring, color feedback and control can be implemented using wired or wireless circuits, systems, interfaces, etc. that can be interactive using for example, but not limited to, smart phones, tablets, computers, laptops, servers, remote controls, etc. The present invention can use or, for example, make, create, produces, etc. any color of white including but not limited to soft, warm, bright, daylight, cool, etc. Color temperature monitoring, feedback, and adjustment can be performed in such embodiments of the present invention. The ability to change to different colors when using light sources capable of supporting such (i.e., LEDs and OLEDs including but not limited to red, green, blue, amber, white LEDs and/or any other possible combination of LEDs and colors). Embodiments of the present invention has the ability to store color choices, selections, etc. and retrieve, restore, display, update, etc. these color choices and selections when using non-fluorescent light sources that can support color changing. Embodiments of the present invention also have the ability to change between various color choices, selections, and associated inputs to do as well as the ability to modulate the color choices and selections. A further feature and capability of embodiments of present invention is use of passive or active color filters and diffusers to produce enhanced lighting effects. In some embodiments, the fluorescent lamp LED replacement disclosed herein is configured as a monochromatic fluorescent lamp LED replacement for use in photosensitive environments such as hospitals, clean rooms, etc, in which the color and/or intensity of light must be controlled, for example, to produce a particular red or amber light. In some embodiments it may be extremely important to have monocolor or nearly monocolor/monochrome light with as close as possible to a single wavelength with, for example, a narrow full width at half maximum (FWHM) wavelength broadening. For example in certain areas of cleanrooms or other areas where photosensitive materials such as photoresist used for patterning which, for example, may be sensitive or partially or completely developed by exposure to wavelengths shorter than, for example, but not limited to, yellow and/or amber, etc. such as green or blue or ultraviolet, implementations and embodiments of the present invention allow such wavelength restrictions to be, for example, addressed, realized and enabled. In some embodiments of the present invention, filters may be used to restrict the wavelengths for uses in, for example, but not limited to photosensitive areas including hospitals, photographic film development, cleanrooms especially cleanrooms and other areas using photosensitive materials and/or photolithography and/or photolithographic processes. Such fluorescent lamp replacement (FLR) wavelength light control can be realized with and by a number of ways, technologies, materials, techniques, lamps, light sources, emitters, etc., including but not limited to, an LED, an OLED, arrays, strings, combinations of including in parallel and/or series of OLEDs and/or LEDs, combinations, groups, and/or subsets of these, which produce light only in the desired spectrum etc. In some other of these embodiments, two or more operating modes are provided, for example, to switch between a red or amber or output to a white output. In other embodiments, health effects of lights and lighting can be used with the present invention to assist in improved sleep, circadian rhythm regulation, control, reset, etc. by only using certain wavelengths at certain times in the circadian rhythm cycle to aid in sleep and circadian rhythm control. Dimming may also be employed as well as feedback on human factors to assist in health related matters including applying certain wavelengths and not applying certain other wavelengths at various times, dimming, not dimming, etc. to improve, for example, sleep, circadian rhythm, health performance, human and other animal behavior and performance, etc. To simulate and properly awake, etc. using the present fluorescent lamp replacement including with feedback such as that from electroencephalography (EEG), motor movement sensors, body temperature, including rectal temperature, biorhythms, motor movements, sleep sensors, sleep actigraphs (generally watch-shaped sensors worn on the wrist), polysomnography (PSG) sensors, etc., wherein any of these or other sensors generate an electrical control signal, either wired or wirelessly, to the fluorescent lamp replacement, and the fluorescent lamp replacement outputs a suitable color and/or intensity in response. For example, light can be dimmed, soothing colors can be generated, etc. Lighting can be controlled based on circadian rythms detected in EEG feedback to enhance sleep. The color of the output light can be adapted based on such feedback, for example to avoid producing light in the blue portion of the spectrum to avoid suppressing melatonin before sleep. Example applications that benefit from such controlled lighting color and/or intensity include transportation means such, but not limited to, airplanes, boats, ships, submarines, busses, etc., dwelling or gathering places such as, but not limited to, hospitals, schools, school rooms, work places, nurseries and pre-school facilities, airports, etc., and light-deprived environments especially natural light-deprived environments including submarines, long airplane flights to assist with jet lag, etc.

In addition, protection can be enabled (or disabled) by microcontroller(s), microprocessor(s), FPGAs, CLDs, PLDs, digital logic, etc. including remotely via wireless or wired connections, based on but not limited to, for example, a sequence of events and/or fault or no-fault conditions, sensor, monitoring, detection, safe operation, etc. An example of protection detection/sensing can include measuring/detecting/sensing lower current than expected due to, for example, a human person being in series with (e.g., in between) one leg of the LED or OLED replacement fluorescent lamp and one side of the power being provided by the energized ballast. The present invention can use microcontroller(s), microprocessor(s), FPGA(s), other firmware and/or software means, digital state functions, etc. to accomplish protection, control, monitoring, operation, etc.

The present fluorescent lamp replacement can provide programmable timed or sensor or event-based control, turning on and off current to the load, dimming the load, etc. as programmed. The present fluorescent lamp replacement (e.g., 472 and/or 474) is configured in some embodiments to set and/or store control functions and operations, i.e., scheduling, turn on/off, dim, respond to voice, motion, etc. at certain time(s) each day, multiple times per day, different days of the week, weekends, different dates including day date and month date, etc., in some cases with partial or full randomization of settings. The settings can be stored in any type of memory including volatile, non-volatile, random access memory (RAM), FLASH, EPROM, EEPROM, other semiconductor, magnetic, optical, etc. memories.

In addition to using a switching element, a linear regulation/regulator instead of switching regulation/regulator can be used or both linear and switching regulation or combinations of both can be used in embodiments of the present invention. For example, a linear regulator designed to operate at nominally 120 V (which could, for example, cover the range of 100 VAC to 132 VAC or higher input voltage could also be used with many electronic and even magnetic ballasts designed to operate, for example, but not limited to, T8 fluorescent tube lamps. Modifications of a linear regulator to include a shunt regulator for use with electronic ballasts can be done in some embodiments of the present invention. Some additional examples of linear circuits including wireless controlled linear regulator circuits suitable for use with both 50 or 60 Hz 120 VAC line voltage and electronic ballasts or 50 or 60 Hz 200 to 240 VAC line voltage and electronic and magnetic ballasts can be found in US Patent Application 14/218,919, filed March 18, 2014, for a "Linear LED Driver" which is incorporated herein by reference for all purposes.

While illustrative embodiments have been described in detail herein, it is to be understood that the concepts disclosed herein may be otherwise variously embodied and employed. In addition, the present invention is applicable to both non-isolated and isolated circuits, including, buck, boost, buck-boost, boost-buck, cuk, fly-back, forward transformers, etc. in, for example, but not limited to, continuous conduction, critical conduction, discontinuous conduction, etc. including resonant approaches, topologies and designs. The present invention can be used in replacement lamps including linear replacement lamps that are designed to provide cool white, bright white, warm white, soft white, etc. (i.e., color ranges that typically span from less than 2700 Kelvin to greater than 6500 Kelvin color temperature with appropriate color rendering index (CRI) and other such optical desired optical performance and perception, etc. The present invention may also be used with multi-color LEDs and organic LEDs (OLEDs) including but not limited to red-green-blue (RGB) LEDs with or without white LEDs, white with RGB (WRGB or RGBW), etc., other colors or types of LEDs and/or OLEDs, etc. Embodiments of the present invention including the LED Fluorescent Lamp Replacement also work with dimming fluorescent lamps ballasts including, but not limited, to DMX, DALI, RS 232, RS422, RS485, universal serial bus (USB), 0 to 10 V (or any other range of voltages including but not limited to 0 to 1 V, 0 to 3 V, 0 to 5 V, 1 to 6 V, 1 to 8 V, etc.), Triac and other phase angle/phase cut dimmers (including both forward and reverse phase cut dimmers), PLC and/or any other type of analog and or digital wired, wireless and/or PLC dimmable fluorescent lamp ballast or related (i.e., HID) ballast. Embodiments of the present invention including, but not limited to, embodiments of the LED Fluorescent Lamp Replacement and Universal AC input can be dimmed using, for example, Triac, Triac-based, forward and reverse dimmers, etc. as well as some embodiments also being remotely dimmable. Nothing in this document should be viewed as limiting in any way or form the present invention as applied to LED replacement lamps for fluorescent lamps.

The present invention may also be powered directly from, for example, 100 to 300 VAC 50 Hz or 60 Hz AC line input using any two input wires and, in general, powered from 100 to 277 VAC or higher voltage with a magnetic Ballast using, for example, in some embodiments all 4 wires.

With some embodiments of the present invention, the starter will automatically be left unpowered using the present invention by the additional two wires thus the removal of the starter is now unnecessary and optional. Should there be a PF capacitor (if applicable) it is now rendered unnecessary with the present invention which can have a very high power factor and the capacitor may, under certain circumstances, actually lower power factor. However the phase and power factor of the present invention can be adjusted as needed. Removal of the capacitor would typically be recommended, but is optional. Any fixture with a magnetic ballast may be left completely unmodified so that either a fluorescent or the present invention may be used interchangeably in such a fixture with a magnetic ballast.

The present invention supports power factor correction (PFC) especially for the universal AC input mode. The present invention in various embodiments supports all types of dimming including, but not limited, Triac, other types of forward and reverse phase dimming, 0 to 10 V dimming, other remote control, dimming and monitoring including powerline, wired and wireless control, etc.

Some embodiments can use the same PWM controller for both the series (input voltage controlled mode - IVCM) and shunt (input current controlled mode - ICCM) with for example an inversion of the IVCM PWM output for the ICCM. ICCM can be used for constant current control (CCC) implementations and applications.

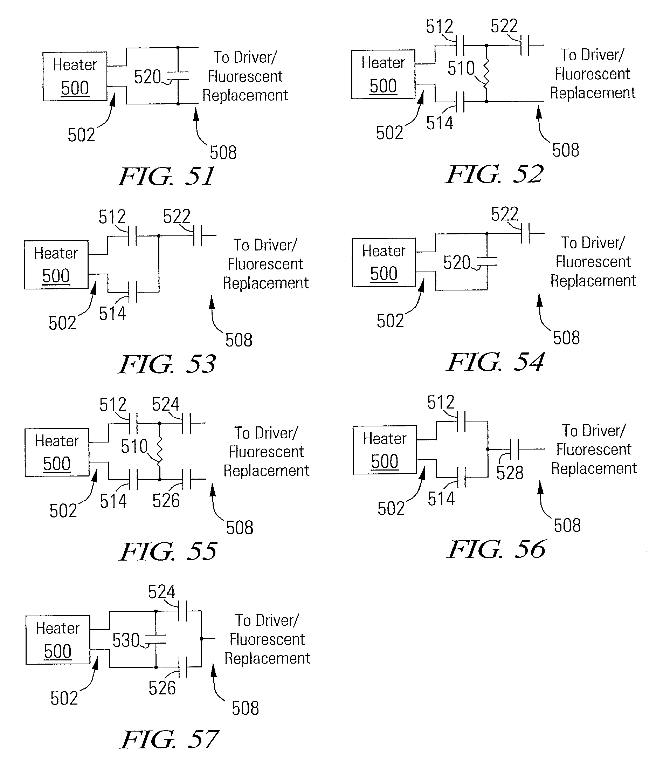

The present invention can be used with all types of ballasts including instant-on, pre-heat, rapid start, programmed start, programmable start, etc. Implementations can be with or without heater connections, can use multiple diodes, heater emulation circuits including both passive and active heater emulation circuits that can be analog, digital, or combinations of the analog and digital. Some simple example implementations are shown in Figs. 45-57. A heater driver 500 configured to power a heater in a fluorescent tube may disable the lamp fixture in some embodiments when no fluorescent tube is installed. Various embodiments of heater emulation circuits are disclosed, with component values selected and arranged to present to the heater driver 500 impedances and/or other characteristics of a heater in a fluorescent tube. This causes the fluorescent lamp fixture to continue to provide power at an output 502 that can be passed to heater emulator output 508 and provided to a fluorescent lamp LED replacement, for example including LED drivers, dimmers, controllers etc. Note that the outputs 508 can be single connectors or double connectors. The examples illustrated and depicted in Figs. 45-57 are typically for each heater with multiples of such circuits (which may or may not share components) used for multiple heater outputs from the respective ballast, etc. For example, rapid start ballasts with heater connections may be made operable using resistors and/or capacitors. Certain implementations require less power and also evenly divide and resistance or reactive (e.g., capacitive and/or inductive) impedances so as to reduce or minimize power losses for the current supplied to the fluorescent lamp replacement(s). An example being Fig. 47, among others, where when having power supplied from an instant start or other ballast without heater(s) with only one electrical connection per 'side' of the fluorescent tube/lamp or fluorescent tube replacement (for a total of two connections) the resistors are effectively put into parallel thus reducing the resistance by a factor of four compared to being in serial for, for example, a heater emulation circuit or as part of a heater emulation circuit. Such heater circuits can contain resistors (e.g., 504, 506, 510), capacitors (e.g., 512, 514, 520, 522, 524, 526, 528, 530), inductors, transformers, transistors, switches, diodes, silicon controlled rectifiers (SCR), triacs, other types of semiconductors and ICs including but not limited to op amps, comparators, timers, counters, microcontroller(s), microprocessors, DSPs, FPGAs, ASICs, CLDs, AND, NOR, Inverters and other types of Boolean logic digital components, combinations of the above, etc.

EMI filters can be included as needed to comply with regulatory and safety agencies. For example, an EMI filter may be required for AC line operation mode or in some cases for the ballast operation mode. Such filters can be switched in or out as needed as part of the present invention. In some embodiments of the present invention, a current shunt can be used to convert the current (I) effectively to a voltage (V). In addition the circuits to this conversion can work with typical voltage mode circuits and should also work without issue with a DC input. As discussed above, the I-V circuit can be replaced/bypassed with the EMI filter for standard AC input operation. This switchover and detection can be accomplished by, for example but not limited to, manual switching, automatic switching, detection and switching, analog or digital switching, remote control, remote sensing and control, remote monitoring and control, by frequency detection/selection, current detection/selection, voltage/detection selection, waveform detection/selection, waveform shape, etc. detection/selection, a combination of the above, etc. In some embodiments of the present invention, the manual or autodetect/select can use conventional, mechanical, solid-state, hybrid relays, SCRs, triacs, transistors including MOSFETs and/or BJTs and other switchable elements. In yet other embodiments, switches, jumpers, cables, matrices, reconfigurable switches and related elements, etc. can be employed. Embodiments of the present invention may include a current limit or limits both for the ballast mode and the AC line mode.

In some embodiments and applications, there may be a need to have a feedback connection from certain parts of the circuit to the I-V section. For example, if the voltage of the I-V output is set too high it may needlessly circulate current, which would lower the efficiency. This can be addressed with proper detection and feedback to ensure high efficiency.

In general, the ballast should supply a decent to high quality +/- AC sine wave and, for many electronic ballasts, if the sine wave current is interrupted/stopped, the ballast, especially for electronic ballasts that are considered 'smart' and should be able to detect and capable of detecting faults, will try to respond by taking an appropriate action such as, for example, trying to restart the ballast lamp load or shutting down. The present invention is able to faithfully emulate a fluorescent lamp and provide the necessary performance and behavior for the electronic ballast to operate correctly.

The current [input] constant current [output] (CCC) shunt design (i.e., ballast mode) of the present invention works with both ∼20 to 100 kHz (typical 40 kHz to 80 kHz) and 50/60/400 Hz constant current input. Embodiments of the present invention can be both low parts count and high efficiency. Some embodiments may include a sine or square-wave conversion stage. The shunt regulator is quite efficient also. In many embodiments of the present invention, at full LED current, little current goes to the shunt, so then the efficiency is very high. With the voltage [input] constant current [output] (i.e., universal AC input mode), the efficiency can also be very high as well as having a very high to ultra high power factor correction/power factor.

For universal CCC/VCC embodiments, the input terminals can be the same. As illustrated in some of the figures, some embodiments include either or both a high-frequency bridge rectifier, and a lossless Zener (PWM shunt regulator).

In some embodiments of the present invention, when in Line (V) mode the shunt is set to control point could be set to, for example, ∼400 V or ∼450 V. When in Ballast (I) mode the shunt is set to a lower voltage, corresponding to the designed power of the LED. For example, if the AC line is under ∼400 V (or ∼450 V) peak, the shunt stays off, so no power or otherwise from the shunt is drawn. This example scheme can also be used with (or without) the frequency detection mode.

In Ballast (I) mode the shunt could be set to, for example, ∼100V. This would draw less idle power from the ballast, and when the LED was at full power the shunt would typically barely be running/on. If the switch was left in the wrong position, the shunt would regulate at 400V, resulting in potentially more power loss (which could be addressed and eliminated with appropriate detection and correction), however the driver would still work and operate properly.

With the present invention, the feedback from the output demand would, in effect, increase the effective resistance/impedance of the converter, thus if the current source went up, the voltage draw would go down thus acting like a negative resistance.

With example embodiments such as depicted in Figs. 18 through 21, transistor 290 is in a switching mode, not linear, so there is very low power dissipation. In some embodiments of the present invention, one or more inductors (as well as and/or in addition to capacitors and other passive and active elements) can be used to keep the LED voltage from going to zero when transistor 290 is ON. Such inductor(s) allows for transistor 290 to act as a variable current shunt to ground, with low power loss or similar and/or other types parallel current regulation, etc. With capacitance on the output, capacitance can also be placed on the input to cut down on spurious signals including noise and spikes. In some embodiments of the present invention, an inductor can also be put in series with the MOSFET, and a clamp diode to contain the flyback voltage. In some embodiments of the present invention, inductors can be put on either or both the input and/or output to also provide filtering to reduce the ripple to the load (i.e., LED array). The switching frequency of, for example, transistor 290 could typically be in the range of 20 kHz or higher (i.e., typically above the human audio range) or, in the case of overcurrent or overvoltage conditions, possibly lower and even much lower than 20 kHz or higher. For dimming, the frequency of the PWM or other dimming can be much lower and typically in the range of ∼100 Hz and higher. For PWM switching and PWM dimming switching, switching can be done on either side of the transformer for embodiments of the present invention depending on considerations that, for example, determine the appropriate placement. Dimming functionality using conventional wall dimmers such as triac and transistor based forward and reverse dimmers, infrared, wireless, analog, low voltage, Ethernet, USB, SPI, I2C, RS232, Firewire, DALI, DMX, RS485, IEEE 488, optical, parallel, UART, and other types of wired and wireless digital and/or analog transceivers, etc. can be used with the present invention to either directly or indirectly (i.e., via a dimming or dimmable ballast) dim the LED or OLED fluorescent lamp replacement.

Embodiments of the present invention allow for no, passive and/or active control. Some embodiments of the present invention provide in the matching circuit, for example, a chopper that typically can be switching in a frequency range of less than 20 kHz to greater than 100 kHz, either free running, self-oscillating or controlled, so that the transformer can be small even with a 60 Hz ballast. In addition, by providing a regulator circuit, the LED can be made to be independent of the ballast, and therefore universal. Some embodiments of the present invention do not use a current to current transformer 272 as shown in Figs. 10 through 17, 40 and 41, and/or do not literally use a current to current transformation. It should be noted that the term/phrase current to current transformer should not be construed to mean or be an actual transformer although in some embodiments it is or may be. For example, in some embodiments, current to current transforming is performed using a current shunt to draw off or dump or shunt some of the input current to yield the desired output current without a transformer. In a similar fashion, the term/phrase/expression Transformer or equivalent 474 in Figs. 39 through 41 should be understood to include things, components, parts, functions, etc. other than transformers including, but not limited, to wire shorts (i.e., direct connections) in place of transformer connections. In addition, in Figs. 25 through 33, the load 398 may also be placed in parallel with both the ballast accept circuit 396 and the boost-buck circuit 394. Note, the boost-buck circuit depicted in block 394 in Figs. 25 through 33 could also be a buck-boost, a buck, a boost, cuk, other non-isolated and/or isolated circuits, topologies, architectures, etc. of essentially any type or form including flyback, forward converters, SEPIC, current-mode, current-fed, voltage mode, voltage fed, etc. A ballast detect circuit may be used to select which of 396 and 394 to power in some embodiments of the present invention.

In some embodiments of the present invention, the PWM or other pulse converter used for the series regulation from the AC lines can also be used for the shunt regulation from the ballast output, with the control inverted from a normal voltage-in/voltage-out converter or voltage-in/current-out operation.

With a ballast, the present some implementations of the present invention utilize current output control with a shunt regulator with switching mode regulation chosen to keep it efficient. In this case, the regulator switches to effective/local ground (low voltage drop equals low power dissipation) or open (no current equals low power dissipation). In addition to the passive and active components mentioned previously, other protection and detection devices and components can be used with the present invention including but not limited to tranzorbs, transient voltage suppressors (TVSs), Varistors, metal oxide varistors (MOVs), surge absorbers, surge arrestors, and other transients detection and protection devices, thermistors or other thermal devices, fuses, resettable fuses, circuit breakers, solid-state circuit breakers and relays, other types of relays including mechanical relays and circuit breakers, etc. In some embodiments of the present invention, a switch may be put (at an appropriate location) in between the ballast output and the fluorescent lamp/fluorescent lamp replacement such that there is no completion of current flow in the fluorescent lamp replacement to act as a protection including shock hazard protection for humans and other living creatures in the event of an improper installation or attempt at or during installation. The detection of a such a fault or improper installation can be done by any method including analog and/or digital circuits including, but not limited to, op amps, comparators, voltage reference, current references, current sensing, voltage sensing, mechanical sensing, etc, microcontrollers, microprocessors, FPGAs, CLDs, wireless transmission, wireless sensing, optical sensing, motion sensing, light/daylight/etc. sensing, gesturing, sonar, infrared, visible light sensing, etc. A microprocessor or other alternative including, but not limited to, those discussed herein may be used to enable or disable protection and may be combined with other functions, features, controls, monitoring, etc. to improve the safety and performance of the present invention including before, during, after dimming, etc.

In embodiments of the present invention that include or involve buck, buck-boost, boost, boost-buck, etc. inductors, one or more tagalong inductors such as those disclosed in US Patent Application 13/674,072, filed November 11, 2012 by Sadwick et al. for a "Dimmable LED Driver with Multiple Power Sources", which is incorporated herein for all purposes, may be used and incorporated into embodiments of the present invention. Such tagalong inductors can be used, among other things and for example, to provide power and increase and enhance the efficiency of certain embodiments of the present invention. In addition, other methods including charge pumps, floating diode pumps, level shifters, pulse and other transformers, bootstrapping including bootstrap diodes, capacitors and circuits, floating gate drives, carrier drives, etc. can also be used with the present invention.

Programmable soft start including being able to also have a soft short at turn-on which then allows the input voltage to rise to its running and operational level can also be included in various implementations and embodiments of the present invention.

Some embodiments of the present invention utilize high frequency diodes including high frequency diode bridges and current to voltage conversion to transform the ballast output into a suitable form so as to be able to work with existing AC line input PFC-LED circuits and drivers. Some other embodiments of the present invention utilize high-frequency diodes to transform the AC output of the electronic ballast (or the low frequency AC output of a magnetic ballast into a direct current (DC) format that can be used directly or with further current or voltage regulation to power and driver LEDs for a fluorescent lamp replacement. Embodiments of the present invention can be used to convert the low frequency (i.e., typically 50 or 60 Hz) magnetic ballast AC output to an appropriate current or voltage to drive and power LEDs using either or both shunt or series regulation. Some other embodiments of the present invention combine one or more of these. In some embodiments of the present invention, one or more switches can be used to clamp the output compliance current and/or voltage of the ballast. Various implementations of the present invention can involve voltage or current forward converters and/or inverters, square-wave, sine-wave, resonant-wave, etc. that include, but are not limited to, push pull, half-bridge, full-bridge, square wave, sine wave, fly-back, resonant, synchronous, etc.

For the present invention, in general, any type of transistor or vacuum tube or other similarly functioning device can be used including, but not limited to, MOSFETs, JFETs, GANFETs, depletion or enhancement FETs, N and/or P FETs, CMOS, PNP BJTs, triodes, etc. which can be made of any suitable material and configured to function and operate to provide the performance, for example, described above. In addition, other types of devices and components can be used including, but not limited to transformers, transformers of any suitable type and form, coils, level shifters, digital logic, analog circuits, analog and digital, mixed signals, microprocessors, microcontrollers, FPGAs, CLDs, PLDs, comparators, op amps, instrumentation amplifiers, and other analog and digital components, circuits, electronics, systems etc. For all of the example figures shown, the above analog and/or digital components, circuits, electronics, systems etc. are, in general, applicable and usable in and for the present invention.

The example figure and embodiments shown in Figs. 1 through 57 are merely intended to provide some illustrations of the present inventions and not limiting in any way or form for the present inventions.

Using digital and/or analog designs and/or microcontrollers and /or microprocessors any and all practical combinations of control, protection, sequencing, levels, etc., some examples of which are listed below for the present invention, can be realized.

In addition to these examples, a potentiometer or similar device such as a variable resistor may be used to control the dimming level. Such a potentiometer may be connected across a voltage such that the wiper of the potentiometer can swing from minimum voltage (i.e., full dimming) to maximum voltage(i.e., full light). Often the minimum voltage will be zero volts which may correspond to full off and, for the example embodiments shown here, the maximum will be equal to or approximately equal to the voltage on the negative input of, for example, a comparator.

Current sense methods including resistors, current transformers, current coils and windings, etc. can be used to measure and monitor the current of the present invention and provide both monitoring and protection.

In addition to dimming by adjusting, for example, a potentiometer, the present invention can also support all standards, ways, methods, approaches, techniques, etc. for interfacing, interacting with and supporting, for example, 0 to 10 V dimming with a suitable reference voltage that can be remotely set or set via an analog or digital input such as illustrated in patent application 61/652,033 filed on May 25, 2012, for a "Dimmable LED Driver", which is incorporated herein by reference for all purposes.

The present invention supports all standards and conventions for 0 to 10 V dimming or other dimming techniques. In addition the present invention can support, for example, overcurrent, overvoltage, short circuit, and over-temperature protection. The present invention can also measure and monitor electrical parameters including, but not limited to, input current, input voltage, power factor, apparent power, real power, inrush current, harmonic distortion, total harmonic distortion, power consumed, watthours (WH) or kilowatt hours (kWH), etc. of the load or loads connected to the present invention. In addition, in certain configurations and embodiments, some or all of the output electrical parameters may also be monitored and/or controlled directly for, for example, LED drivers and FL ballasts. Such output parameters can include, but are not limited to, output current, output voltage, output power, duty cycle, PWM, dimming level(s), provide data monitoring, data logging, analytics, analysis, etc. including, but not limited to, input and output current, voltage, power, phase angle, real power, light output (lumens, lux), dimming level if appropriate, kilowatt hours (kWH), efficiency, temperature including temperatures of components, driver, LED or OLED array or array or strings or other types of configurations and groupings, etc.

In place of the potentiometer, an encoder or decoder can be used. The use of such also permits digital signals to be used and allows digital signals to either or both locally or remotely control the dimming level and state. A potentiometer with an analog to digital converter (ADC) or converters (ADCs) could also be used in many of such implementations of the present invention.

The above examples and figures are merely meant to provide illustrations of the present and should not be construed as limiting in any way or form for the present invention.

In addition to the examples above and any combinations of the above examples, the present invention can have multiple dimming levels set by the dimmer in conjunction with the motion sensor and photosensor/photodetector and/or other control and monitoring inputs including, but not limited to, analog (e.g., 0 to 10 V, 0 to 3 V, etc.), digital (RS232, RS485, USB, DMX, SPI, SPC, UART, DALI, other serial interfaces, etc.), a combination of analog and digital, analog-to-digital converters and interfaces, digital-to-analog converters and interfaces, wired, wireless (i.e., RF, WiFi, ZigBee, Zwave, ISM bands, 2.4 GHz, Bluetooth, etc.), powerline (PLC) including X-10, Insteon, HomePlug, etc.), etc.

The present invention is highly configurable and words such as current, set, specified, etc. when referring to, for example, the dimming level or levels, may have similar meanings and intent or may refer to different conditions, situations, etc. For example, in a simple case, the current dimming level may refer to the dimming level set by, for example, a control voltage from a digital or analog source including, but not limited to digital signals, digital to analog converters (DACs), potentiometer(s), encoders, etc.

The present invention can have embodiments and implementations that include manual, automatic, monitored, controlled operations and combinations of these operations. The present invention can have switches, knobs, variable resistors, encoders, decoders, push buttons, scrolling displays, cursors, etc. The present invention can use analog and digital circuits, a combination of analog and digital circuits, microcontrollers and/or microprocessors including, for example, DSP versions, FPGAs, CLDs, ASICs, etc. and associated components including, but not limited to, static, dynamic and/or non-volatile memory, a combination and any combinations of analog and digital, microcontrollers, microprocessors, FPGAs, CLDs, etc. Items such as the motion sensor(s), photodetector(s)/photosensor(s), microcontrollers, microprocessors, controls, displays, knobs, etc. may be internally located and integrated/incorporated into the dimmer or externally located. The switches/switching elements can consist of any type of semiconductor and/or vacuum technology including but not limited to triacs, transistors, vacuum tubes, triodes, diodes or any type and configuration, pentodes, tetrodes, thyristors, silicon controlled rectifiers, diodes, etc. The transistors can be of any type(s) and any material(s) - examples of which are listed below and elsewhere in this document.

The dimming level(s) can be set by any method and combinations of methods including, but not limited to, motion, photodetection/light, sound, vibration, selector/push buttons, rotary switches, potentiometers, resistors, capacitive sensors, touch screens, wired, wireless, PLC interfaces, etc. In addition, both control and monitoring of some or all aspects of the dimming, motion sensing, light detection level, sound, etc. can be performed for and with the present invention.

other embodiments can use other types of comparators and comparator configurations, other op amp configurations and circuits, including but not limited to error amplifiers, summing amplifiers, log amplifiers, integrating amplifiers, averaging amplifiers, differentiators and differentiating amplifiers, etc. and/or other digital and analog circuits, microcontrollers, microprocessors, complex logic devices (CLDs), field programmable gate arrays (FPGAs), etc.

The dimmer for dimmable drivers may use and be configured in continuous conduction mode (CCM), critical conduction mode (CRM), discontinuous conduction mode (DCM), resonant conduction modes, etc., with any type of circuit topology including but not limited to buck, boost, buck-boost, boost-buck, cuk, SEPIC, flyback, forward-converters, etc. The present invention works with both isolated and non-isolated designs including, but not limited to, buck, boost-buck, buck-boost, boost, cuk, SEPIC, flyback and forward-converters including but not limited to push-pull, single and double forward converters, current mode, voltage mode, current fed, voltage fed, etc. The present invention itself may also be non-isolated or isolated, for example using a tagalong inductor or transformer winding or other isolating techniques, including, but not limited to, transformers including signal, gate, isolation, etc. transformers, optoisolators, optocouplers, etc.

The present invention may include other implementations that contain various other control circuits including, but not limited to, linear, square, square-root, power-law, sine, cosine, other trigonometric functions, logarithmic, exponential, cubic, cube root, hyperbolic, etc. in addition to error, difference, summing, integrating, differentiators, etc. type of op amps. In addition, logic, including digital and Boolean logic such as AND, NOT (inverter), OR, Exclusive OR gates, etc., complex logic devices (CLDs), field programmable gate arrays (FPGAs), microcontrollers, microprocessors, application specific integrated circuits (ASICs), etc. can also be used either alone or in combinations including analog and digital combinations for the present invention. The present invention can be incorporated into an integrated circuit, be an integrated circuit, etc. It should be noted that the various blocks shown in the drawings and discussed herein may be implemented in integrated circuits along with other functionality. Such integrated circuits may include all of the functions of a given block, system or circuit, or a subset of the block, system or circuit. Further, elements of the blocks, systems or circuits may be implemented across multiple integrated circuits. Such integrated circuits may be any type of integrated circuit known in the art including, but are not limited to, a monolithic integrated circuit, a flip chip integrated circuit, a multichip module integrated circuit, and/or a mixed signal integrated circuit. It should also be noted that various functions of the blocks, systems or circuits discussed herein may be implemented in either software or firmware. In some such cases, the entire system, block or circuit may be implemented using its software or firmware equivalent. In other cases, the one part of a given system, block or circuit may be implemented in software or firmware, while other parts are implemented in hardware.

Embodiments of the present invention may also include short circuit protection (SCP) and other forms of protection including protection against damage due to other sources of power including but not limited to AC mains power lines and/or other types of devices, circuits, etc. Some embodiments of the present invention may use, for example, but are not limited to capacitors to limit the low frequency (examples include, but are not limited to, AC line mains at 50 Hz, 60 Hz, 400 Hz) voltage and/or current that can be applied to the load. In addition to capacitors, inductors and resistors may also be used in some embodiments of the present invention.

The present invention can also incorporate at an appropriate location or locations one or more thermistors (i.e., either of a negative temperature coefficient [NTC] or a positive temperature coefficient [PTC]) to provide temperature-based load current limiting.

As an example, when the temperature rises at the selected monitoring point(s), the phase dimming of the present invention can be designed and implemented to drop, for example, by a factor of, for example, two. The output power, no matter where the circuit was originally in the dimming cycle, will also drop/decrease by some factor. Values other than a factor of two (i.e., 50%) can also be used and are easily implemented in the present invention by, for example, changing components of the example circuits described here for the present invention. As an example, a resistor change would allow and result in a different phase/power decrease than a factor of two. The present invention can be made to have a rather instant more digital-like decrease in output power or a more gradual analog-like decrease, including, for example, a linear decrease in output phase or power once, for example, the temperature or other stimulus/signal(s) trigger/activate this thermal or other signal control.

In other embodiments, other temperature sensors may be used or connected to the circuit in other locations. The present invention also supports external dimming by, for example, an external analog and/or digital signal input. One or more of the embodiments discussed above may be used in practice either combined or separately including having and supporting both 0 to 10 V and digital dimming. The present invention can also have very high power factor. The present invention can also be used to support dimming of a number of circuits, drivers, etc. including in parallel configurations. For example, more than one driver can be put together, grouped together with the present invention. Groupings can be done such that, for example, half of the dimmers are forward dimmers and half of the dimmers are reverse dimmers. Again, the present invention allows easy selection between forward and reverse dimming that can be performed manually, automatically, dynamically, algorithmically, can employ smart and intelligent dimming decisions, artificial intelligence, remote control, remote dimming, etc.

The present invention may be used in conjunction with dimming to provide thermal control or other types of control to, for example, a dimming LED driver. For example, embodiments of the present invention or variations thereof may also be adapted to provide overvoltage or overcurrent protection, short circuit protection for, for example, a dimming LED or OLED driver, etc., or to override and cut the phase and power to the dimming LED driver(s) based on any arbitrary external signal(s) and/or stimulus. The present invention can also be used for purposes and applications other than lighting - as an example, electrical heating where a heating element or elements are electrically controlled to, for example, maintain the temperature at a location at a certain value. The present invention can also include circuit breakers including solid state circuit breakers and other devices, circuits, systems, etc. that limit or trip in the event of an overload condition/situation. The present invention can also include, for example analog or digital controls including but not limited to wired (i.e., 0 to 10 V, RS 232, RS485, IEEE standards, SPI, I2C, other serial and parallel standards and interfaces, etc.), wireless including as discussed above, powerline, etc. and can be implemented in any part of the circuit for the present invention. The present invention can be used with a buck, a buck-boost, a boost-buck and/or a boost, flyback, or forward-converter design, topology, implementation, others discussed herein, etc.

A dimming voltage signal, VDIM, which represents a voltage from, for example but not limited to, a 0-10 V Dimmer can be used with the present invention; when such a VDIM signal is connected, the output as a function time or phase angle (or phase cut) will correspond to the inputted VDIM.

Other embodiments can use comparators, other op amp configurations and circuits, including but not limited to error amplifiers, summing amplifiers, log amplifiers, integrating amplifiers, averaging amplifiers, differentiators and differentiating amplifiers, etc. and/or other digital and analog circuits, microcontrollers, microprocessors, complex logic devices, field programmable gate arrays, etc.

Some embodiments include a circuit that dynamically adjusts such that the output current to a load such as a LED and/or OLED array is essentially kept constant by, for example, in some embodiments of the present invention shorting or shunting current from the ballast as needed to maintain the output current to a load such as a LED array essentially constant. Some embodiments of the present invention may use time constants to as part of the circuit.

Some embodiments include a circuit to power a protection device/switch such that the switch is on unless commanded or controlled to be set off in the event/situation/condition of a fault hazard. Such a control can be implemented in various and diverse forms and types including, but not limited to, latching, hiccup mode, etc. In some embodiments of the present invention such a circuit may have a separate rectification stage. In and for various embodiments of the present invention, the device/switch may be of any type or form or function and includes but is not limited to, semiconductor switches, vacuum tube switches, mechanical switches, relays, etc.

Some embodiments include an over-voltage protection (OVP) circuit that shunts/shorts or limits the ballast output and/or the output to the load such as a LED array in the event that the output voltage exceeds a set value.

Some embodiments include an over temperature protection (OTP) circuit that shunts/shorts or limits the ballast output and/or the output to the load such as a LED array in the event that the temperature at one or more locations exceeds a set value or set values.

Embodiments of the present invention may also include short circuit protection (SCP) and other forms of protection including protection against damage due to other sources of power including but not limited to AC mains power lines and/or other types of devices, circuits, etc. Some embodiments of the present invention may use, for example, but are not limited to capacitors to limit the low frequency (examples include, but are not limited to, AC line mains at 50 Hz, 60 Hz, 400 Hz) voltage and/or current that can be applied to the load.

Embodiments of the present invention include, but are not limited to, having a rectification stage (such as, but not limited to) consisting of a single full wave rectification stage to provide power/current to the output load such as an LED output load and a rectification stage (such as, but not limited to) consisting of a single full wave rectification stage to provide power to, for example, the hazard protection circuit.

In some embodiments, dimming control including but not limited to remote dimming can be performed using a controller implementing motion detection, recognizing motion or proximity to a detector or sensor and setting a dimming level in response to the detected motion or proximity, or with audio detection, for example detecting sounds or verbal commands to set the dimming level in response to detected sounds, volumes, or by interpreting the sounds, including voice recognition or, for example, by gesturing including hand or arm gesturing, etc. Some embodiments may be dual dimming, supporting the use of a 0-10 V dimming signal in addition to a Triac-based or other phase-cut or phase angle dimmer. Some embodiments of the present invention may multiple dimming (i.e., accept dimming information, input(s), control from two or more sources). In addition, the resulting dimming, including current or voltage dimming, can be either PWM (digital) or analog dimming or both or selectable either manually, automatically, or by other methods and ways including software, remote control of any type including, but not limited to, wired, wireless, voice, voice recognition, gesturing including hand and/or arm gesturing, pattern and motion recognition, PLC, RS232, RS422, RS485, SPI, I2C, universal serial bus (USB), Firewire 1394, DALI, DMX, etc. Voice, voice recognition, gesturing, motion, motion recognition, etc. can also be transmitted via wireless, wired and/or powerline communications or other methods, etc. In some embodiments of the present invention speakers, earphones, microphones, etc. may be used with voice, voice recognition, sound, etc. and other methods, ways, approaches, algorithms, etc. discussed herein.

In some embodiments, the fluorescent lamp LED replacement includes LEDs and/or OLEDs with a color adapted specifically to a particular application. For example,

The present invention includes implementations that contain various other control circuits including, but not limited to, linear, square, square-root, power-law, sine, cosine, other trigonometric functions, logarithmic, exponential, cubic, cube root, hyperbolic, etc. in addition to error, difference, summing, integrating, differentiators, etc. type of op amps. In addition, logic, including digital and Boolean logic such as AND, NOT (inverter), OR, Exclusive OR gates, etc., complex logic devices (CLDs), field programmable gate arrays (FPGAs), microcontrollers, microprocessors, application specific integrated circuits (ASICs), etc. can also be used either alone or in combinations including analog and digital combinations for the present invention. The present invention can be incorporated into an integrated circuit, be an integrated circuit, etc.

The present invention, although described primarily for motion and light/photodetection control, can and may also use other types of stimuli, input, detection, feedback, response, etc. including but not limited to sound, vibration, frequencies above and below the typical human hearing range, temperature, humidity, pressure, light including below the visible (i.e., infrared, IR) and above the visible (i.e., ultraviolet, UV), radio frequency signals, combinations of these, etc. For example, the motion sensor may be replaced or augmented with a sound sensor (including broad, narrow, notch, tuned, tank, etc. frequency response sound sensors) and the light sensor could consist of one or more of the following: visible, IR, UV, etc. sensors. In addition, the light sensor(s)/detector(s) can also be replaced or augmented by thermal detector(s)/sensor(s), etc.

The example embodiments disclosed herein illustrate certain features of the present invention and not limiting in any way, form or function of present invention. The present invention is, likewise, not limited in materials choices including semiconductor materials such as, but not limited to, silicon (Si), silicon carbide (SiC), silicon on insulator (SOI), other silicon combination and alloys such as silicon germanium (SiGe), etc., diamond, graphene, gallium nitride (GaN) and GaN-based materials, gallium arsenide (GaAs) and GaAs-based materials, etc. The present invention can include any type of switching elements including, but not limited to, field effect transistors (FETs) of any type such as metal oxide semiconductor field effect transistors (MOSFETs) including either p-channel or n-channel MOSFETs of any type, junction field effect transistors (JFETs) of any type, metal emitter semiconductor field effect transistors, etc. again, either p-channel or n-channel or both, bipolar junction transistors (BJTs) again, either NPN or PNP or both, heterojunction bipolar transistors (HBTs) of any type, high electron mobility transistors (HEMTs) of any type, unijunction transistors of any type, modulation doped field effect transistors (MODFETs) of any type, etc., again, in general, n-channel or p-channel or both, vacuum tubes including diodes, triodes, tetrodes, pentodes, etc. and any other type of switch, etc.

While detailed descriptions of one or more embodiments of the invention have been given above, various alternatives, modifications, and equivalents will be apparent to those skilled in the art without varying from the spirit of the invention. Therefore, the above description should not be taken as limiting the scope of the invention, which is defined by the appended claims.

## Claims

1. An apparatus for supplying power, comprising:
a power input configured to receive electrical current from a fluorescent lamp fixture ballast;
a constant current output; and
a constant current driver connected between the output of the fluorescent lamp fixture ballast and the constant current output, wherein current is shunted to control a current level to the constant current output.

2. The apparatus of claim 1, wherein the constant current driver comprises a shunt regulator.

3. The apparatus of claim 1 or claim 2, wherein at least a portion of the current from the output of the fluorescent lamp fixture ballast is shorted to a ground through a switch to control the current level to the constant current output.

4. The apparatus of claim 3, further comprising a diode connected in series with the constant current output, operable to prevent the constant current output from shorting to ground when the output of the fluorescent lamp fixture ballast is shorted to the ground through the switch.

5. The apparatus of any one of the preceding claims, further comprising a light emitting diode-based lamp connected to the power output, wherein the light emitting diode-based lamp preferably comprises a white light emitting diode, a red light emitting diode, a green light emitting diode, and a blue light emitting diode; or red, green and blue light emitting diodes; or red, yellow and blue light emitting diodes; or organic light emitting diodes, OLED; or a single color light emitting diode.

6. The apparatus of any one of the preceding claims, wherein the fluorescent lamp fixture ballast comprises a rapid start ballast, a dimming ballast, a pre-heating ballast or a programmable start ballast.

7. The apparatus of any one of the preceding claims, further comprising a heater emulation circuit connected to the fluorescent lamp fixture ballast.

8. The apparatus of claim 7, wherein the heater emulation circuit comprises a capacitor network, wherein the capacitor network preferably comprises a first capacitor connected to a first heater output, a second capacitor connected to a second heater output, and a third capacitor connected at a first terminal to a node between the first capacitor and the second capacitor and at a second terminal to the constant current driver.

9. The apparatus of any one of the preceding claims, further comprising a dimmer operable to control the current level to the constant current output.

10. The apparatus of claim 9, wherein the dimmer is operable to control a color and intensity of a light emitting diode-based lamp connected to the constant current output.

11. The apparatus of any one of the preceding claims, further comprising a data monitor circuit operable to monitor the current level to the constant current output.

12. The apparatus of any one of the preceding claims, further comprising a voice control circuit operable to receive voice commands specifying a color and intensity of a light emitting diode-based lamp connected to the constant current output.

13. The apparatus of any one of the preceding claims, wherein the constant current driver comprises a current transformer.

14. The apparatus of any one of the preceding claims, wherein the constant current driver comprises a switching circuit.

15. The apparatus of any one of the preceding claims, further comprising a motion sensor, wherein the constant current driver is operable to adapt the current level to the constant current output based at least in part on an output of the motion sensor.
